# EUROPÄISCHE PATENTSCHRIFT

(11) **EP 3 378 115 B1**
(45) Veröffentlichungstag und Bekanntmachung des Hinweises auf die Patenterteilung: **04.09.2019**
(21) Anmeldenummer: 16801707.7
(22) Anmeldetag: 14.11.2016
(51) Int. Cl.: H01M 4/38, H01M 4/60, H01M 8/18

(54) **HYBRID-FLOW-BATTERIE ZUR SPEICHERUNG ELEKTRISCHER ENERGIE UND DEREN VERWENDUNG**
HYBRID FLOW BATTERY FOR STORING ELECTRICAL ENERGY AND USE THEREOF
BATTERIE À FLUX HYBRIDE POUR STOCKER DE L'ÉNERGIE ÉLECTRIQUE ET SON UTILISATION

(30) Priorität: 18.11.2015 DE 102015014828
(43) Veröffentlichungstag der Anmeldung: 26.09.2018
(73) Patentinhaber: JenaBatteries GmbH, 07745 Jena (DE)
(72) Erfinder: WINSBERG, Jan, 47269 Duisburg (DE); JANOSCHKA, Tobias, 07743 Jena (DE); SCHUBERT, Ulrich Sigmar, 07743 Jena (DE); HÄUPLER, Bernhard, 95032 Hof (DE); HAGER, Martin, 07774 Dornburg-Camburg (DE)
(74) Vertreter: Ackermann, Joachim
(86) Internationale Anmeldenummer: PCT/EP2016/001900
(87) Internationale Veröffentlichungsnummer: WO 2017/084749

(56) Entgegenhaltungen:
- EP-A1- 2 485 312
- WO-A1-2016/168459
- CN-A- 102 479 968
- DE-A1-102014 001 816
- US-A1- 2013 266 836
- TOBIAS JANOSCHKA ET AL: "An aqueous, polymer-based redox-flow battery using non-corrosive, safe, and low-cost materials", NATURE, Bd. 527, Nr. 7576, 21. Oktober 2015 (2015-10-21), Seiten 78-81, XP055338491, United Kingdom ISSN: 0028-0836, DOI: 10.1038/nature15746

## Beschreibung

Die Erfindung betrifft eine Redox-Flow-Batterie, auch als Redox-Fluss-Batterie (RFB) bekannt. Derartige Systeme dienen der Speicherung elektrischer Energie auf Basis elektrochemischer Redox-Reaktionen. Eine Redox-Flow-Batterie enthält zwei durch eine Membran getrennte, polaritätsspezifische Kammern (Halbzellen), die jeweils mit einer Flüssigkeit gefüllt sind und von ein oder mehreren separaten Tanks beliebiger Größe durch Pumpen gespeist werden. Die jeweilige Flüssigkeit enthält Wasser, anorganische Säure und/oder organisches Lösungsmittel in denen die jeweiligen redoxaktiven Stoffe sowie ein anorganisches oder organisches Salz (Leitadditiv) gelöst sind. Dabei kann das Leitadditiv auch selbst redoxaktiv sein. Über die Membran hinweg können Ionen des Leitadditivs zwischen beiden Kammern ausgetauscht werden, um Ladungsneutralität innerhalb der jeweiligen Flüssigkeit in jedem Ladezustand zu gewährleisten. Die jeweiligen redoxaktiven Stoffe werden durch die Membran am Austausch zwischen den Halbzellen gehindert.

Die Zellen eignen sich aufgrund ihrer hervorragenden Skalierbarkeit insbesondere als stationäre Energiespeicher für verschiedene Leistungs- und Kapazitätsanforderungen. So zum Beispiel als Puffersysteme für erneuerbare Energien, sowohl im privaten (z.B. Ein- oder Mehrfamilienhäuser), sowie industriellen Sektor (z.B. Wind- und Solarkraftwerke). Sie haben somit großes Potential für die Gewähreistung der Stromnetzstabilität und für die dezentrale Energieversorgung. Aber auch mobile Anwendungen (Elektroautos) sind denkbar.

Bestehende RFB sind elektrochemische Energiespeicher. Die zur Potentialeinstellung an den Elektroden nötigen Stoffe sind flüssige, gelöste oder auch in Partikelform auftretende redoxaktive Spezies, die beim Lade- bzw. Entladevorgang in einem elektrochemischen Reaktor in ihre jeweils andere Redoxstufe überführt werden. Dazu werden die Elektrolytlösungen (Katholyt, Anolyt) aus einem Tank entnommen und aktiv an die Elektroden gepumpt. Anoden- und Kathodenraum sind im Reaktor durch eine semipermeable Membran getrennt, welche meist eine hohe Selektivität für Protonen zeigt. Solange Elektrolytlösung gepumpt wird, kann Strom entnommen werden. Der Ladevorgang ist dann einfach die Umkehrung des Vorganges. Damit ist die Energiemenge, die in einer RFB gespeichert werden kann, direkt proportional zur Größe der Vorratstanks. Die entnehmbare Leistung dagegen ist eine Funktion der Größe des elektrochemischen Reaktors.

RFB haben eine komplexe Systemtechnik, die in etwa der einer Brennstoffzelle entspricht. Übliche Baugrößen der Einzel-Reaktoren bewegen sich im Bereich von circa 2 bis 50 kW. Die Reaktoren können sehr einfach modular kombiniert werden, ebenso kann die Tankgröße nahezu beliebig angepasst werden.

Eine besondere Bedeutung kommt hierbei RFB zu, welche mit Vanadiumverbindungen als Redoxpaar auf beiden Seiten arbeiten (VRFB). Dieses System wurde 1986 erstmals beschrieben (AU 575247 B) und stellt momentan den technischen Standard dar. Weitere anorganische, niedermolekulare Redoxpaare wurden untersucht, unter anderem auf Basis von Cer (B. Fang, S. Iwasa, Y. Wei, T. Arai, M. Kumagai: "A study of the Ce(III)/Ce(IV) redox couple for redox flow battery application", Electrochimica Acta 47, 2002, 3971-3976), Zink-Cer (P. Leung, C. Ponce-de-Leon, C. Low, F. Walsh: "Zinc deposition and dissolution in methanesulfonic acid onto a carbon composite electrode as the negative electrode reactions in a hybrid redox flow battery", Electrochimica Acta 56, 2011, 6536-6546), Zink-Nickel (J. Cheng, L. Zang, Y. Yang, Y. Wen, G. Cao, X. Wang, "Preiiminary study of a single flow zinc-nickel battery", Electrochemistry Communications 9, 2007, 2639-2642), Ruthenium (M. H. Chakrabarti, E. Pelham, L. Roberts, C. Bae, M. Saleem: "Ruthenium based redox flow battery for solar energy storage", Energy Conv. Manag. 52, 2011, 2501-2508), Chrom (C-H. Bae, E. P. L. Roberts, R. A. W. Dryfe: "Chromium redox couples for application to redox flow batteries", Electrochimica Acta 48, 2002, 279-87), Uran (T. Yamamura, Y. Shiokawa, H. Yamana, H. Moriyama: "Electrochemical investigation of uranium β-diketonates for all-uranium redox flow battery", Electrochimica Acta 48, 2002, 43-50), Mangan (F. Xue, Y. Wang, W. Hong Wang, X. Wang: "Investigation on the electrode process of the Mn(II)/Mn(III) couple in redox flow battery", Electrochimica Acta 53, 2008, 6636-6642) und Eisen (Y. Xu, Y. Wen, J. Cheng, G. Cao, Y. Yang: "A study of iron in aqueous solutions for redox flow battery application", Electrochimica Acta 55, 2010, 715-720). Allerdings basieren diese Systeme auf metallhaltigen Elektrolyten, welche giftig bzw. umweltschädlich sind.

Neben diesen metallbasierten Systemen sind auch Metall-Halogen-Flow-Batterien bekannt. Die Zink-Brom-Flow-Batterie ist ein Vertreter dieser Klasse (R. A. Putt, A. Attia, "Development of zinc bromide batteries for stationery energy storage," Gould, Inc., for Electric Power Research Institute, Project 635-2, EM-2497, 1982). Hier wird zum einen das Redoxpaar Zn(II)/Zn(0) und zum anderen das Redoxpaar Br₂/2Br⁻ genutzt. Um ein Austreten des hochgiftigen Br₂-Gases zu verhindern muss dieses aufwändig durch oft teure Komplexierungsreagenzien als Partikel im Elektrolyt gehalten werden. Dies verursacht wiederum hohe Anschaffungskosten und ein dauerhaftes Austreten von Br₂-Gas kann nicht gänzlich ausgeschlossen werden. Somit gehen starke Sicherheitsbedenken mit dem Betrieb diesen Systems einher. Anstelle des Redoxpaares Brom-Bromid kann auch alternativ das Redoxpaar Iod-Polyiodid verwendet werden (B. Li, Z. Nie, M. Vijayakumar, G. Li, J. Liu, V. Sprenkle, W. Wang: "Ambipolar zinc-polyiodide electrolyte for a high-energy density aqueous redox flow battery, Nature communications 6, 2015, 6303), welches das Gefahrenpotential im Vergleich zu einer Brom-Bromid-Kathode senkt, aber dennoch die nachteiligen Eigenschaften einer Kathode auf Halogenbasis immer noch beibehält.

Rein organische Redoxverbindungen wurden bisher kaum in RFB eingesetzt. So wurde niedermolekulares 2,2,6,6-Tetramethylpiperidinyloxyl (TEMPO) und N-Methylphthalimid in einer RFB mit einer ionenleitenden Membran eingesetzt (Z. Li, S. Li, S. Q. Liu, K. L. Huang, D. Fang, F. C. Wang, S. Peng: "Electrochemical properties of an all-organic redox flow battery using 2,2,6,6-tetramethyl-1-piperidinyloxy and N-methylphthalimide", Electrochem. Solid State Lett., 2011, 14, A171-A173). Hier konnten nur äußerst geringe Stromstärken und wenige Lade-Entlade-Zyklen erreicht werden.

Des Weiteren ist eine Redox-Flow-Batterie beschrieben, die als redoxaktive Substanzen hochmolekulare Verbindungen (Polymere) und als Separator eine semipermeable Membran (z. B. eine Größenausschlussmembran) einsetzt (T. Janoschka, M. Hager, U. S. Schubert: "Redox-Flow-Zelle mit hochmolekularen Verbindungen als Redoxpaar und semipermeabler Membran zur Speicherung elektrischer Energie", WO 2014/026728 A1). Aufgrund der niedrigen Löslichkeit von Polymeren im Vergleich zu anorganischen Salzen erreichen polymerbasierte RFB nicht die Kapazitäten von RFB auf der Basis niedermolekularer redoxaktiver Substanzen. Eine ähnliche RFB mit hochmolekularen Verbindungen als redoxaktiven Substanzen ist aus DE 10 2014 001 816 A1 bekannt.

Ferner ist ein Energiespeicher beschrieben, der aus einer festen Zink-Anode und einer Polyanilin-Kathode besteht. Polyanilin (PANI) ist ein konjugiertes Makromolekül und wird in diesem Fall in Form von Partikeln (als Suspension) in einem wässrigen Elektrolyt eingesetzt (Y. Zhao, S. Si, C. Liao: "A single flow zinc//polyaniline suspension rechargeable battery", J. Power Sources, 2013, 241, 449-453). Konjugierte Polymere eignen sich nicht als redoxaktive Substanz in Energiespeichern, da die Redoxreaktionen dieser nicht bei einem konstanten Potential ablaufen, sondern nach Ladezustand des Polymers variieren. Daraus ergeben sich steile Potentialkurven in Abhängigkeit zum Ladezustand. Ebenso wurden hier nur 30 Lade-/Entladezyklen gezeigt, was eine kurze Lebensdauer des Systems impliziert.

US 2013/0266836 A1 beschreibt nicht-wässrige Elektrolyte enthaltende RFB. Als redoxaktive Komponente kann im Anolyten ein Alkali- bzw. Übergangsmetallsalz eingesetzt werden, dessen redoxaktive Ionen im nicht-wässrigen organischen Lösungsmittel gelöst sind. Als redoxaktive Ionen werden Ionen des Lithiums, des Titans, des Zinks, des Chroms, des Mangans, des Eisens, des Nickels und des Kupfers genannt. In einer Ausführungsform können für den Katholyten in nicht-wässrigen organischen Lösungsmitteln lösliche Anthrachinonderivate (AQ) oder 2,2,6,6-Tetramethyl-1-piperidinyloxyderivate (TEMPO) eingesetzt werden. Die beschriebene RFB zeichnet sich durch eine hohe Energiedichte aus.

Der Erfindung liegt die Aufgabe zugrunde eine Redox-Flow-Batterie zu schaffen, welche Kosten- und Aufwandseinsparungen im Bereich der verwendeten Komponenten, im Besonderen im Bereich der redoxaktiven Substanzen gestattet, und darüber hinaus eine verbesserte Umweltverträglichkeit und eine verbesserte Unempfindlichkeit gegenüber äußeren Einflüssen, insbesondere eine verbesserte Unempfindlichkeit gegenüber atmosphärischen Sauerstoff, aufweist. Ebenso soll sich die RFB durch flache Potentialkurven in Abhängigkeit zum Ladezustand auszeichnen. Des Weiteren soll die RFB das nutzbare Potentialfenster in wässrigen Medien erweitern, das Gesamtvolumen der RFB soll reduziert sein, und die RFB soll eine gesteigerte Gesamteffizienz aufweisen.

Diese Aufgabe wird durch die Bereitstellung der in Anspruch 1 beschriebenen Hybrid-Flow-Batterie gelöst.

Der Begriff "Batterie" wird im Rahmen dieser Beschreibung in seiner weitesten Bedeutung verwendet. Dabei kann es sich um eine einzelne wieder aufladbare elektrochemische Zelle oder eine Kombination mehrerer solcher elektrochemischer Zellen handeln

Unter Hybrid-Flow-Batterie wird im Rahmen dieser Beschreibung eine Redox-Flow Batterie verstanden, in der ein redoxaktives Material nicht in allen Redoxzuständen in Lösung, als Dispersion oder in flüssiger Form vorliegt, sondern auch in fester Form auf einer Elektrode vorkommt. Nachfolgend wird diese Hybrid-Flow-Batterie auch Redox-Flow-Batterie genannt.

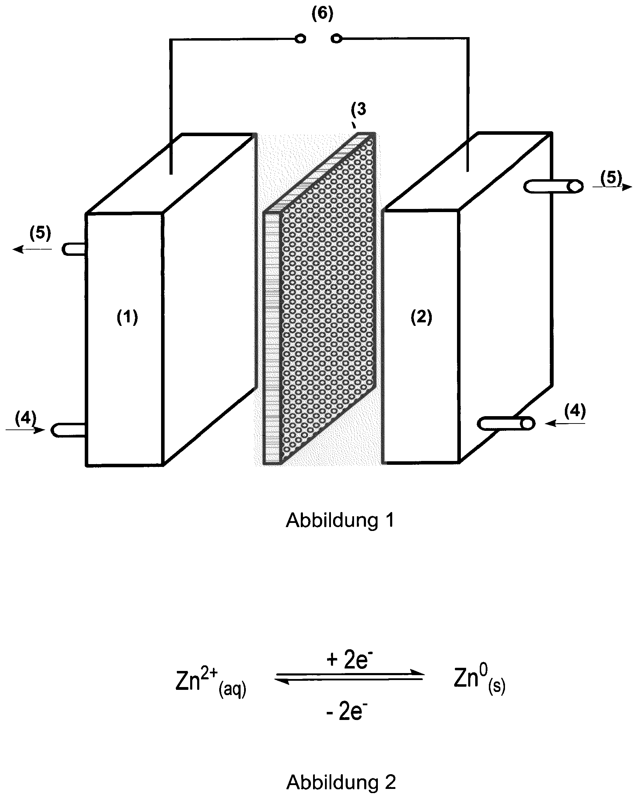

In Abbildung 1 ist ein Schema der erfindungsgemäßen Redox-Flow-Batterie dargestellt. Gezeigt werden zwei polaritätsspezifische Kammern (jeweils eine für Katholyt und Anolyt (1, 2)), eine semipermeable Membran (3), Zuflussstutzen (4) zu den Kammern, Abflussstutzen (5) von den Kammern und Stromableiter (6). In der Darstellung sind die benötigten Pumpen und Tanks nicht dargestellt. Die in Figur 1 gezeigte Redox-Flow-Batterie zur Energiespeicherung enthält also eine Reaktionszelle mit zwei polaritätsspezifischen Kammern für Katholyt und Anolyt (1, 2), die jeweils mit einem Flüssigkeitsspeicher (Tank) über Pumpen in Verbindung stehen können und die durch eine semipermeable Membran (3) getrennt sind, die für das Redoxpaar im Katholyten undurchlässig ist. Die Kammern (1, 2) sind jeweils mit redoxaktiven Komponenten gefüllt, die in Substanz, gelöst oder in fester Form in Wasser bzw. in Wasser und in einem organischen Lösungsmittel vorliegen, sowie darin gelösten Leitadditiven und eventuellen weiteren Hilfsadditiven.

Erfindungsgemäß wird als redoxaktive Komponente zum einen eine auf Zink basierende Anode und zum anderen eine auf 2,2,6,6-tetrasubstituiertem Piperidinyloxyl-basierende Elektrode, wie eine auf 2,2,6,6-Tetramethylpiperidinyloxyl (TEMPO)-basierende Kathode eingesetzt.

Als Stromabnehmer (6) werden sämtliche Komponenten bezeichnet, welche die Übertragung von elektrischem Strom zu den Elektroden ermöglichen. An den Elektroden (Kathode und Anode), die in direktem Kontakt zum Elektrolyten stehen, finden die Redoxreaktionen statt.

Der Elektrolyt selbst besteht aus einem flüssigen wässrigen Medium, dass sowohl die redoxaktiven Spezies als auch organische oder anorganische Salze (Leitadditive) enthält. Zusätzlich können noch weitere Hilfsadditive im Elektrolyten enthalten sein.

Als redoxaktives Anoden-Material dient Zink. Besonders hervorzuheben sind die unterschiedlichen Aggregatzustände, die Zink innerhalb der Batterie annehmen kann.

Während des Ladevorgangs werden im Elektrolyt gelöste Zink(II)-Kationen auf der Anodenoberfläche zu elementarem Zink(0) reduziert. Hierfür müssen zwei Elektronen aufgenommen werden. Das aktive Material Zink kommt also sowohl in gelöster als auch fester Form in der Batterie vor. Abbildung 2 zeigt die Redoxgleichung von Zink während des Lade-/Entladevorgangs.

Die Zink-Feststoffanode kann als metallische Elektrode permanent vorliegen oder aber auch erst in situ während des Ladevorgangs der Batterie auf einer elektrisch leitfähigen Oberfläche innerhalb der Kammer, durch die Reduktion von Zink-Kationen, gebildet werden. Die Zink-Kationen können sowohl hauptsächlich als aktives Material, aber auch sekundär als Leitadditiv oder als Teil eines Leitadditiv-Gemisches fungieren.

Die Kathode, auch als Katholyt bezeichnet, wird durch die redoxaktive Substanz 2,2,6,6-tetrasubstituiertes Piperidinyloxyl gebildet. Ein bevorzugter Vertreter davon ist 2,2,6,6-Tetramethylpiperidinyloxyl (TEMPO). Das 2,2,6,6-tetrasubstituierte Piperidinyloxyl kann sowohl als niedermolekulare oder als oligomere Verbindung oder auch als Teil einer hochmolekularen Verbindung, auch als Makromolekül bezeichnet, eingesetzt werden. Bei letzterer befinden sich die 2,2,6,6-tetrasubstituierten Piperidinyloxyl-Einheiten in den Seitenketten eines Makromoleküls. Das Makromolekül selbst kann neben den redoxaktive Einheiten aufweisenden Seitenketten zusätzlich noch weitere Seitenketten tragen, die zum Beispiel die Löslichkeit im Elektrolyten verbessern. Neben der 2,2,6,6-Tetrasubstitution kann die Piperidinyloxyl-Einheit noch durch weitere Substituenten modifiziert sein.

Die Kathode kann die Moleküle mit den 2,2,6,6-tetrasubstituierten Piperidinyloxyl-Einheiten sowohl in gelöster Form oder auch als Dispersion in einem wässrigen oder wässrig-organischen Elektrolyten enthalten. Ferner können die Moleküle mit den 2,2,6,6-tetrasubstituierten Piperidinyloxyl-Einheiten auch flüssige Verbindungen sein.

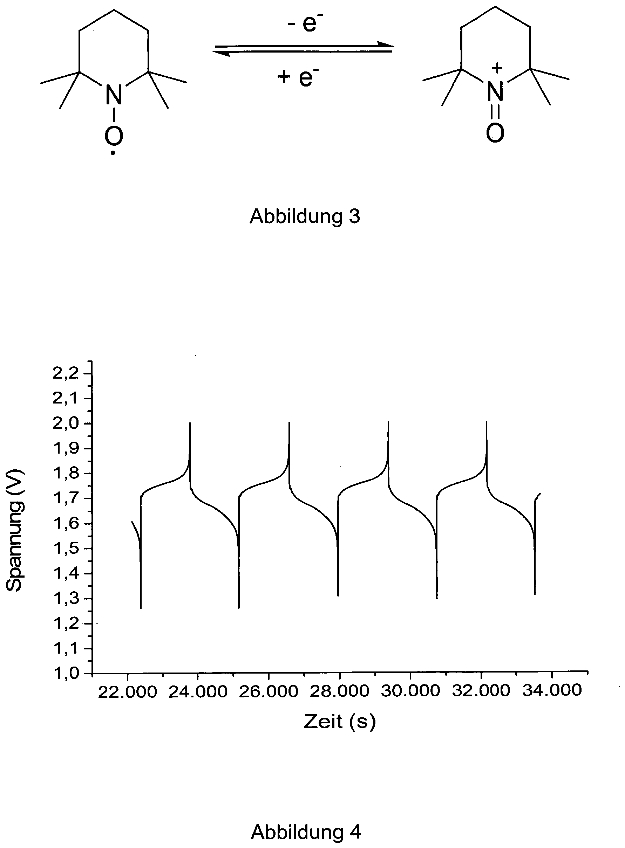

Die 2,2,6,6-tetrasubstituierten Piperidinyloxyl-Einheiten werden während des Ladevorgangs zu N-Oxoammonium-Einheiten oxidiert und beim Entladen wieder zum Piperidinyloxyl reduziert. Abbildung 3 zeigt die Redoxgleichung von TEMPO während des Lade-/Entladevorgangs.

In der erfindungsgemäßen Hybrid-Flow-Batterie wird ein Katholyt verwendet, der eine Verbindung mit mindestens einem Rest der Formel I im Molekül als redoxaktive Komponente enthält 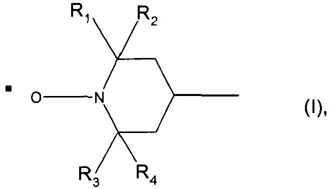 worin die von der 4-Position in der Struktur der Formel I abgehende Linie eine kovalente Bindung darstellt, welche die Struktur der Formel I mit dem Rest des Moleküls verbindet, und
R₁, R₂, R₃ und R₄ unabhängig voneinander Alkyl, Cycloalkyl, Aryl oder Aralkyl bedeuten.

Wie oben dargelegt, kann der Rest der Formel I Teil eines niedermolekularen, oligomeren oder polymeren Moleküls sein.

Unter niedermolekularen Molekülen sind im Rahmen dieser Beschreibung Verbindungen zu verstehen, die keine von Monomeren abgeleiteten wiederkehrenden Struktureinheiten aufweisen und die mindestens einen, vorzugsweise ein bis sechs, besonders bevorzugt ein bis vier, insbesondere ein bis drei und ganz besonders bevorzugt ein oder zwei Reste der Formel I enthalten.

Unter oligomeren Molekülen sind im Rahmen dieser Beschreibung Verbindungen zu verstehen, welche zwei bis zehn von Monomeren abgeleitete wiederkehrende Struktureinheiten aufweisen, die jeweils einen Rest der Formel I tragen.

Unter polymeren Molekülen sind im Rahmen dieser Beschreibung Verbindungen zu verstehen, welche mehr als zehn, vorzugsweise elf bis fünfzig von Monomeren abgeleitete wiederkehrende Struktureinheiten aufweisen, die jeweils einen Rest der Formel I tragen.

In einer bevorzugten Ausführungsform der Erfindung enthält der Katholyt eine redoxaktive Komponente mit ein bis sechs, vorzugsweise ein bis vier, insbesondere ein bis drei und ganz besonders bevorzugt ein bis zwei Resten der Formel I im Molekül.

In einer besonders bevorzugten Ausführungsform der Erfindung enthält der Katholyt als redoxaktive Komponente eine Verbindung der Formeln Ia, Ib, Ic, Id, Ie und/oder If 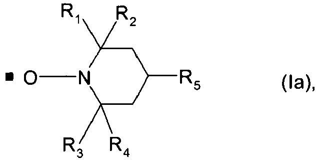 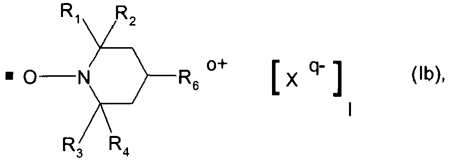 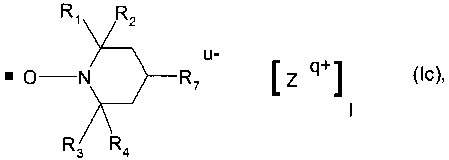 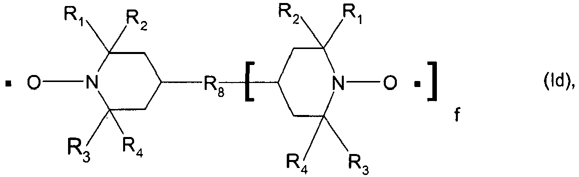 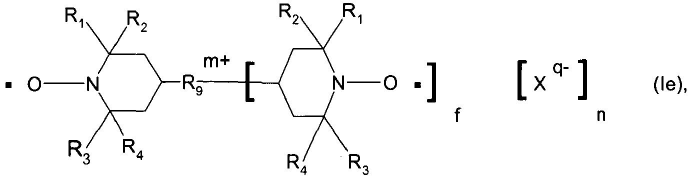 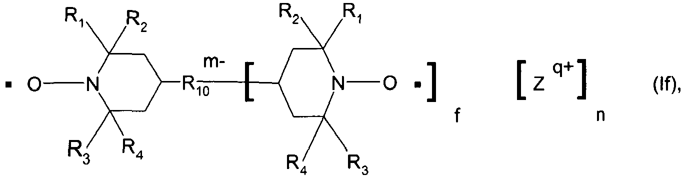 worin
R₁, R₂, R₃ und R₄, die weiter oben definierte Bedeutung besitzen,
X ein q-wertiges anorganisches oder organisches Anion oder eine Mischung derartiger Anionen bedeutet,
q eine ganze Zahl von 1 bis 3 ist,
o eine ganze Zahl von 1 bis 4 ist,
u eine ganze Zahl von 1 bis 4 ist,
R₈ eine zwei- bis vierwertige organische Brückengruppe ist,
R₅ Wasserstoff, Alkyl, Alkoxy, Haloalkyl, Cycloalkyl, Aryl, Aralkyl, Heterocyclyl, Halogen, Hydroxy, Amino, Nitro oder Cyano ist, und
R₆ ein o-fach, vorzugsweise ein einfach positiv geladener einwertiger organischer Rest, insbesondere ein quaternärer Ammoniumrest, ein quaternärer Phosphoniumrest, ein ternärer Sulfoniumrest oder ein o-fach, vorzugsweise ein einfach positiv geladener einwertiger heterocyclischer Rest ist,
R₉ ein m-fach positiv geladener zwei- bis vierwertiger organischer Rest, insbesondere zwei- bis vierwertiger quaternärer Ammoniumrest, ein zwei- bis vierwertiger quaternärer Phosphoniumrest, ein zwei- bis dreiwertiger ternärer Sulfoniumrest oder ein m-fach positiv geladener zwei- bis vierwertiger heterocyclischer Rest ist,
R₇ ein u-fach, vorzugsweise ein einfach negativ geladener einwertiger Rest, insbesondere ein Carboxyl- oder Sulfonsäurerest oder ein u-fach, vorzugsweise ein einfach negativ geladener einwertiger heterocyclischer Rest ist,
R₁₀ ein m-fach negativ geladener zwei- bis vierwertiger organischer Rest, insbesondere ein mit ein oder zwei Carboxyl- oder Sulfonsäuregruppen substituierter Alkylenrest, oder ein mit ein oder zwei Carboxyl- oder Sulfonsäuregruppen substituierter Phenylenrest oder ein mit ein oder zwei Carboxyl- oder Sulfonsäuregruppen substituierter zweiwertiger heterocyclischer Rest ist,
Z ein q-wertiges anorganisches oder organisches Kation oder eine Mischung derartiger Kationen bedeutet,
f eine ganze Zahl von 1 bis 3 ist,
l eine Zahl mit dem Wert o / q oder u / q ist,
m eine ganze Zahl von 1 bis 4 ist, und
n eine Zahl mit dem Wert m/q bedeutet.

Weitere erfindungsgemäß eingesetzte redoxaktive Komponenten sind Oligomere oder Polymere, die ein Rückgrat aufweisen, welches mehrere der oben definierten redoxaktiven Einheiten der Formel I enthält.

Beispiele für Oligomere oder Polymere mit mehreren redoxaktiven Einheiten der Formel I sind Oligomere oder Polymere enthaltend die wiederkehrenden Struktureinheiten der Formel II 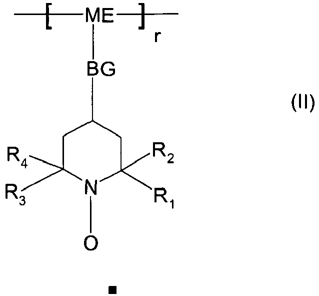 worin
R₁, R₂, R₃ und R₄, die weiter oben definierte Bedeutung besitzen,
ME eine von einem polymerisierbaren Monomer abgeleitete wiederkehrende Struktureinheit ist,
BG eine kovalente Bindung oder eine Brückengruppe ist, und
r eine ganze Zahl von 2 bis 150, vorzugsweise von 2 bis 80 und ganz besonders bevorzugt von 8 bis 40 ist.

Die wiederkehrenden Einheiten ME und BG bilden das Rückgrat des Oligomers oder Polymers, welches mehrere Einheiten der oben definierten redoxaktiven Einheit der Formel I enthält.

Beispiele für Stoffklassen, welche das Rückgrat des Oligomers oder Polymers bilden können, sind von ethylenisch ungesättigten Carbonsäuren oder deren Estern oder Amiden abgeleitete Polymere, wie Polymethacrylat, Polyacrylat, Polymethacryl-amid oder Polyacrylamid, von ethylenisch ungesättigten Arylverbindungen abgeleitete Polymere, wie Polystyrol, von Vinylestern gesättigter Carbonsäuren abgeleitete Polymere oder deren Derivate, wie Polyvinylacetat oder Polyvinylalkohol, von Olefinen bzw. bi- oder polycyclischen Olefinen abgeleitete Polymere, wie Polyethylen, Polypropylen oder Polynorbornen, von imidbildendenen Tetracarbonsäuren und Diaminen abgeleitete Polyimide, von natürlich vor-kommenden Polymeren sowie deren chemisch modifizierten Derivaten abgeleitete Polymere, wie Cellulose oder Celluloseether, sowie Polyurethane, Polyvinylether, Polythiophene, Polyacetylen, Polyalkylenglycole, Poly-7-oxanorbornen, Polysiloxane, Polyethylenglycol und deren Derivate, wie deren Ether.

Nachfolgend sind Beispiele von Kombinationen der Struktureinheiten ME und der Brückengruppen BG für einige der oben genannten Stoffklassen aufgeführt. Dabei handelt es sich um

| | | |
|---|---|---|
| Polymethacrylat | BG = -COO- | 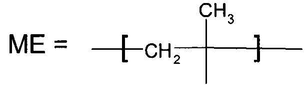 |
| Polyacrylat | BG = -COO- | 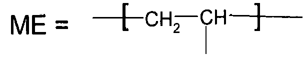 |
| Polymethacrylamid | BG = -CONH- | 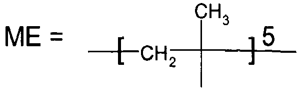 |
| Polyacrylamid | BG = -CONH- | 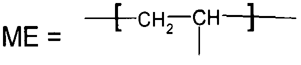 |
| Polystyrol | BG = kovalente C-C-Bindung oder -CH₂- oder-NH- | 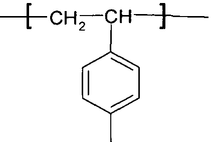 |
| Polyvinylacetat | BG = kovalente C-C-Bindung | 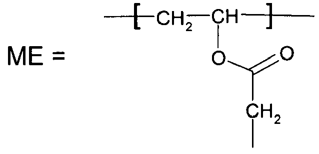 |
| Polyethylen | BG = kovalente C-C-Bindung | 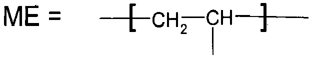 |
| Polypropylen | BG = kovalente C-C-Bindung | 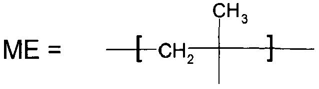 |
| Polyvinylether | BG = -O- | 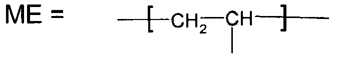 |

Besonders bevorzugt eingesetzte Stoffklassen, welche das Rückgrat des Oligomers oder Polymers bilden, sind Polymethacrylate, Polyacrylate, Polystyrol und Polyvinylether.

Die redoxaktiven Einheiten der Formel I sind mit dem Polymerrückgrat kovalent verbunden.

Die redoxaktive Komponenten enthaltenden Polymeren können als lineare Polymere vorliegen oder aber es handelt sich um Kamm- und Sternpolymere, Dendrimere, Leiterpolymere, ringförmige Polymere, Polycatenane und Polyrotaxane.

Vorzugsweise setzt man Kamm- und Sternpolymere, Dendrimere, Leiterpolymere, ringförmige Polymere, Polycatenane und Polyrotaxane ein. Diese Typen zeichnen sich durch eine erhöhte Löslichkeit aus und die Viskosität der erhaltenen Lösungen ist in der Regel niedriger als bei entsprechenden linearen Polymeren.

Die Löslichkeit der erfindungsgemäß eingesetzen redoxaktive Komponenten enthaltenden Polymeren kann weiterhin durch Co-Polymerisation bzw. Funktionalisierung, z.B. mit Polyethylenglycol, Polymethacrylsäure, Polyacrylsäure oder Polystyrolsulfonat, verbessert werden.

Die Herstellung der erfindungsgemäß eingesetzen redoxaktiven oligomeren oder polymeren Komponenten kann mit den üblichen Polymerisationsverfahren erfolgen. Beispiele dafür sind die Polymerisation in Substanz, die Polymierisation in Lösung oder die Emulsions- bzw. Suspensionspolymerisation. Dem Fachmann sind diese Vorgehensweisen bekannt.

Ein Beispiel für eine bevorzugt eingesetzte oligomere oder polymere redoxaktive Komponente ist ein von TEMPO-Methacrylat und/oder von TEMPO-Acrylat abgeleitetes Oligomer oder Polymer, insbesondere ein von TEMPO-Methacrylat und/oder von TEMPO-Acrylat abgeleitetes Cooligomer oder Copolymer, das zur Verbesserung der Löslichkeit mit [2-(Methacryloyloxy)ethyl]-amin oder davon abgeleiteten Ammoniumsalzen, wie dem Trimethylammoniumchlorid, und/oder mit [2-(Acryloyloxy)ethyl]-amin oder davon abgeleiteten Ammoniumsalzen, wie dem Trimethylammoniumchlorid, copolymerisiert worden ist.

Bedeutet einer der Reste R₁, R₂, R₃, R₄ und/oder R₅ Alkyl, so kann die Alkylgruppe sowohl verzweigt als auch unverzweigt sein. Eine Alkylgruppe enthält typischerweise ein bis zu zwanzig Kohlenstoffatome, bevorzugt ein bis zu zehn Kohlenstoffatome. Beispiele für Alkylgruppen sind: Methyl, Ethyl, n- Propyl, Isopropyl, n-Butyl, *sec-*Butyl, *tert*.-Butyl, Pentyl, n-Hexyl, n-Heptyl, 2-Ethylhexyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl oder Eicosyl. Besonders bevorzugt sind Alkylgruppen mit ein bis sechs Kohlenstoffatomen. Alkylgruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Bedeutet der Rest R₅ Alkoxy, so kann die Alkoxygruppe aus einer Alkyleinheit bestehen, die sowohl verzweigt als auch unverzweigt sein kann. Eine Alkoxygruppe enthält typischerweise ein bis zu zwanzig Kohlenstoffatome, bevorzugt ein bis zu zehn Kohlenstoffatome. Beispiele für Alkoxygruppen sind: Methoxy, Ethoxy, Isopropoxy, n-Butoxy, sec.-Butoxy, tert.-Butoxy, Pentyloxy, n-Hexyloxy, n-Heptyloxy, 2-Ethylhexyloxy, n-Octyloxy, n-Nonyloxy, n-Decyloxy, n-Tridecyloxy, n-Tetradecyloxy, n-Pentadecyloxy, n-Hexadecyloxy, n-Octadecyloxy oder Eicosyloxy. Besonders bevorzugt sind Alkoxygruppen mit ein bis sechs Kohlenstoffatomen.

Bedeutet der Rest R₅ Haloalkyl, so kann die Haloalkylgruppe sowohl verzweigt als auch unverzweigt sein. Eine Haloalkylgruppe enthält typischerweise ein bis zu zwanzig Kohlenstoffatome, die wiederum unabhängig voneinander mit einem oder mehreren Halogenatomen substituiert sind, bevorzugt ein bis zehn Kohlenstoffatome. Beispiele für Halogenatome sind Fluor, Chlor, Brom oder lod. Bevorzugt sind Fluor und Chlor. Beispiele für Haloalkylgruppen sind: Trifluoromethyl, Difluoromethyl, Fluoromethyl, Bromodifluoromethyl, 2-Chloroethyl, 2-Bromoethyl, 1,1-Difluoroethyl, 2,2,2-Trifluoroethyl, 1,1,2,2-Tetrafluoroethyl, 2-Chloro-1,1,2-trifluoroethyl, Pentafluoroethyl, 3-Bromopropyl, 2,2,3,3-Tetrafluoropropyl, 1,1,2,3,3,3-Hexafluoropropyl, 1,1,1,3,3,3-Hexafluoropropyl, 3-Bromo-2-methylpropyl, 4-Bromobutyl, Perfluoropentyl.

Bedeutet einer der Reste R₁, R₂, R₃, R₄ und/oder R₅ Cycloalkyl, so ist die Cycloalkylgruppe typischerweise eine cyclische Gruppe, enthaltend drei bis acht, vorzugsweise fünf, sechs oder sieben Ringkohlenstoffatome, die jeweils unabhängig voneinander substituiert sein können. Beispiele für Substituenten sind Alkylgruppen oder zwei Alkylgruppen, die zusammen mit den Ringkohlenstoffen, an denen sie gebunden sind, einen weiteren Ring bilden können. Beispiele für Cycloalkylgruppen sind Cyclopropyl, Cyclopentyl oder Cyclohexyl. Cycloalkylgruppen können gegebenenfalls substituiert sein, beispielsweise mit Carboxyl- oder Sulfonsäuregruppen, mit Carboxylester- oder Sulfonsäureester-gruppen, mit Carboxylamid- oder Sulfonsäureamidgruppen, mit Hydroxyl- oder Aminogruppen oder mit Halogenatomen.

Bedeutet einer der Reste R₁, R₂, R₃, R₄ und/oder R₅ Aryl, so ist die Arylgruppe typischerweise eine cyclische aromatische Gruppe, enthaltend fünf bis vierzehn Kohlenstoffatome, die jeweils unabhängig voneinander substituiert sein können. Beispiele für Substituenten sind Alkylgruppen oder zwei Alkylgruppen, die gemeinsam mit den Ringkohlenstoffatomen, an denen sie gebunden sind, einen weiteren Ring bilden können. Beispiele für Arylgruppen sind Phenyl, Biphenyl, Anthryl oder Phenantolyl. Arylgruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Bedeutet der Rest R₅ Heterocyclyl, so kann die Heterocyclylgruppe typischerweise eine cyclische Gruppe mit vier bis zehn Ringkohlenstoffatomen und mindestens einem Ringheteroatom aufweisen, die jeweils unabhängig voneinander substituiert sein können. Beispiele für Substituenten sind Alkylgruppen, oder zwei Alkylgruppen die zusammen mit den Ringkohlenstoffen an denen sie gebunden sind einen weiteren Ring bilden können. Beispiele für Heteroatome sind Sauerstoff, Stickstoff, Phosphor, Bor, Selen oder Schwefel. Beispiele für Hetero-cyclylgruppen sind Furyl, Thienyl, Pyrrolyl oder Imidazolyl. Heterocyclylgruppen sind vorzugsweise aromatisch. Heterocyclylgruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Bedeutet einer der Reste R₁, R₂, R₃, R₄ und/oder R₅ Aralkyl, so ist die Aralkylgruppe typischerweise eine Arylgruppe, wobei Aryl zuvor bereits definiert wurde, an die kovalent eine Alkylgruppe gebunden ist. Die Aralkylgruppe kann am aromatischen Ring beispielsweise mit Alkylgruppen oder mit Halogenatomen substituiert sein. Ein Beispiel für eine Aralkylgruppe ist Benzyl. Aralkylgruppen können gegebenenfalls substituiert sein, beispielsweise mit Carboxyl- oder Sulfonsäuregruppen, mit Carboxylester- oder Sulfonsäureester-gruppen, mit Carboxylamid- oder Sulfonsäureamidgruppen, mit Hydroxyl- oder Aminogruppen oder mit Halogenatomen.

Bedeutet der Rest R₅ Amino, so kann die Aminogruppe unsubstituiert sein oder ein oder zwei oder drei Substituten tragen, vorzugsweise Alkyl- und/oder Arylgruppen. Alkylsubstituenten können sowohl verzweigt als auch unverzweigt sein. Eine Mono- oder Dialkylaminogruppe enthält typischerweise ein oder zwei Alkylgruppen mit ein bis zu zwanzig Kohlenstoffatomen, vozugsweise mit ein bis sechs Kohlenstoffatomen. Beispiele für Monoalkylaminogruppen sind Methylamino, Ethylamino, Propylamino oder Butylamino. Beispiele für Dialkylaminogruppen sind: Diethylamino, Di-propylamino oder Di-butylamino. Beispiele für Trialkylaminogruppen sind: Tri-ethylamino, Tri-propylamino oder Tri-butylamino.

Bedeutet der Rest R₅ Halogen, so ist darunter ein kovalent gebundenes Fluor-, Chlor-, Brom- oder lodatom zu verstehen. Bevorzugt sind Fluor oder Chlor.

Unter R₈ als zwei- bis vierwertiger organischer Brückengruppe ist ein organischer Rest zu verstehen, der über zwei, drei oder vier kovalente Bindungen mit dem Rest des Moleküls verbunden ist.

Beispiele für zweiwertige organische Reste sind Alkylen, Alkylenoxy, Poly(alkylenoxy), Alkylenamino, Poly(alkylenamino), Cycloalkylen, Arylen, Aralkylen oder Heterocyclylen. Diese Reste sind bereits weiter oben eingehend beschrieben worden.

Alkylengruppen können sowohl verzweigt als auch unverzweigt sein. Eine Alkylengruppe enthält typischerweise ein bis zu zwanzig Kohlenstoffatome, bevorzugt zwei bis zu vier Kohlenstoffatome. Beispiele für Alkylengruppen sind: Methylen, Ethylen, Propylen und Butylen. Alkylengruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Alkylenoxy- und Poly(alkylenoxy)gruppen können sowohl verzweigte als auch unverzweigte Alkylengruppen enthalten. Eine in einer Alkylenoxy- oder in einer Poly(alkylenoxy)gruppe auftretende Alkylengruppe enthält typischerweise zwei bis vier Kohlenstoffatome, bevorzugt zwei oder drei Kohlenstoffatome. Die Anzahl der Wiederholeinheiten in den Poly(alkylenoxy)gruppen kann in weiten Bereichen schwanken. Typische Anzahlen von Wiederholeinheiten bewegen sich im Bereich von 2 bis 50. Beispiele für Alkylenoxygruppen sind: Ethylenoxy, Propylenoxy und Butylenoxy. Beispiele für Poly(alkylenoxy)gruppen sind: Poly(ethylenoxy), Poly(propylenoxy) und Poly(butylenoxy).

Alkylenamino- und Poly(alkylenamino)gruppen können sowohl verzweigte als auch unverzweigte Alkylengruppen enthalten. Eine in einer Alkylenamino- oder in einer Poly(alkylenamino)gruppe auftretende Alkylengruppe enthält typischerweise zwei bis vier Kohlenstoffatome, bevorzugt zwei oder drei Kohlenstoffatome. Die Anzahl der Wiederholeinheiten in den Poly(alkylenamino)gruppen kann in weiten Bereichen schwanken. Typische Anzahlen von Wiederholeinheiten bewegen sich im Bereich von 2 bis 50. Beispiele für Alkylenaminogruppen sind: Ethylenamino, Propylenamino und Butylenamino. Beispiele für Poly(alkylenamino)gruppen sind: Poly(ethylenamino), Poly(propylenamino) und Poly(butylenamino).

Cycloalkylengruppen enthalten typischerweise fünf, sechs oder sieben Ringkohlenstoffatome, die jeweils unabhängig voneinander substituiert sein können. Beispiele für Substituenten sind Alkylgruppen oder zwei Alkylgruppen, die zusammen mit den Ringkohlenstoffen, an denen sie gebunden sind, einen weiteren Ring bilden können. Ein Beispiel für eine Cycloalkylengruppe ist Cyclohexylen. Cycloalkylengruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen.

Arylengruppen sind typischerweise cyclische aromatische Gruppen, die fünf bis vierzehn Kohlenstoffatome enthalten, die jeweils unabhängig voneinander substituiert sein können. Beispiele für Arylengruppen sind o-Phenylen, m-Phenylen, p-Phenyl, o-Biphenylyl, m-Biphenylyl, p-Biphenylyl, 1-Anthryl, 2-Anthryl, 9-Anthryl, 1-Phenantolyl, 2-Phenantolyl, 3-Phenantolyl, 4-Phenantolyl oder 9-Phenantolyl. Arylengruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen. Weitere Beispiele für Substituenten sind Alkylgruppen oder zwei Alkylgruppen, die gemeinsam mit den Ringkohlenstoffatomen, an denen sie gebunden sind, einen weiteren Ring bilden können.

Heterocyclylengruppen sind typischerweise cyclische Gruppen mit vier bis zehn Ringkohlenstoffatomen und mindestens einem Ringheteroatom, die jeweils unabhängig voneinander substituiert sein können. Beispiele für Heteroatome sind Sauerstoff, Stickstoff, Phosphor, Bor, Selen oder Schwefel. Beispiele für Heterocyclylengruppen sind Furandiyl, Thiophendiyl, Pyrroldiyl oder Imidazoldiyl. Heterocyclylengruppen sind vorzugsweise aromatisch. Heterocyclylgruppen können gegebenenfalls substituiert sein, beispielsweise mit Carboxyl- oder Sulfonsäuregruppen, mit Carboxylester- oder Sulfonsäureestergruppen, mit Carboxylamid- oder Sulfonsäureamidgruppen, mit Hydroxyl- oder Aminogruppen oder mit Halogenatomen. Weitere Beispiele für Substituenten sind Alkylgruppen, oder zwei Alkylgruppen die zusammen mit den Ringkohlenstoffen an denen sie gebunden sind einen weiteren Ring bilden können.

Aralkylengruppe sind typischerweise Arylgruppen, an die ein oder zwei Alkylgruppen kovalent gebunden sind. Aralkylgruppen können über ihren Arylrest und ihren Alkylrest oder über zwei Alkylreste mit dem Rest des Moleküls kovalent verbunden sein. Die Aralkylengruppe kann am aromatischen Ring beispielsweise mit Alkylgruppen oder mit Halogenatomen substituiert sein. Beispiel für Aralkylengruppen sind Benzylen oder Dimethylphenylen (Xylylen).

Beispiele für R₈ als dreiwertiger organischer Rest sind Alkyltriyl, Alkoxytriyl, Tris-poly(alkylenoxy), Tris-poly(alkylenamino), Cycloalkyltriyl, Aryltriyl, Aralkyltriyl oder Heterocyclyltriyl. Diese Reste entsprechen den bereits weiter oben eingehend beschriebenen zweiwertigen Resten mit dem Unterschied, dass diese mit drei kovalenten Bindungen anstelle von zwei kovalenten Bindungen mit dem Rest des Moleküls verbunden sind.

Beispiele für R₈ als vierwertiger organischer Rest sind Alkylquaternyl, Alkoxyquaternyl, Quater-poly(alkylenoxy), Quater-poly(alkylenamino), Cycloalkylquaternyl, Aryl-quaternyl, Aralkylquaternyl oder Heterocyclylquaternyl. Diese Reste entsprechen den bereits weiter oben eingehend beschriebenen zweiwertigen Resten mit dem Unterschied, dass diese mit vier kovalenten Bindungen anstelle von zwei kovalenten Bindungen mit dem Rest des Moleküls verbunden sind.

R₆ ist ein o-fach positiv geladener, vorzugsweise ein einfach positiv geladener einwertiger organischer Rest. Dabei handelt es sich in der Regel um Alkyl, Alkoxy, Haloalkyl, Cycloalkyl, Aryl, Aralkyl oder Heterocyclyl, das einen bis vier positiv geladene Reste enthält, insbesondere quaternäre Ammoniumreste, quaternäre Phosphoniumreste, ternäre Sulfoniumreste oder einen ein- bis vierfach geladenen einwertigen heterocyclischen Rest. Der Ladungsausgleich erfolgt über das oder die Anionen X^{q-}. Die Anbindung des o-fach positiv geladenen Restes an den Piperidin-1-oxylrest erfolgt vorzugsweise über das Heteroatom des o-fach positiv geladenen Restes. Besonders bevorzugte Beispiele für Reste R₆ sind die Reste -N⁺R₁₁R₁₂R₁₃, -P⁺R₁₁R₁₂R₁₃, -S⁺R₁₁R₁₂ oder -Het⁺, worin R₁₁, R₁₂ und R₁₃ unabhängig voneinander Wasserstoff, Alkyl, Cycloalkyl, Aryl, Aralkyl oder Heterocyclyl, insbesondere C₁-C₆-Alkyl, Cyclohexyl, Phenyl oder Benzyl sind, und Het einen einwertigen und einfach positiv geladenen heterocyclischen Rest darstellt, der ein bis drei Ringstickstoffatome oder ein Ringstickstoffatom und ein bis zwei Ringsauerstoffatome oder Ringschwefelatome aufweist, besonders bevorzugt einen einwertigen Imidazolium-, Pyridinium-, Guanidinium-, Uronium-, Thiouronium-, Piperidinium- oder Morpholiniumrest.

Rg ist ein m-fach positiv geladener zwei- bis vierwertiger organischer Rest. Dabei handelt es sich um einen organischen Rest, der m positiv geladene Gruppen aufweist und der über zwei, drei oder vier kovalente Bindungen mit dem Rest des Moleküls verbunden ist. Beispiele für R₉ entsprechen den weiter oben für R₈ aufgeführten Beispielen mit dem Unterschied, dass diese Reste zusätzlich mit m positiv geladenen Gruppen substituiert sind oder m positiv geladene Gruppen im Molekülgerüst aufweisen. So kann R₉ Alkylen, Alkylenoxy, Poly(alkylenoxy), Alkylenamino, Poly(alkylenamino), Cycloalkylen, Arylen, Aralkylen oder Heterocyclylen bedeuten, die mit m einfach positiv geladenen Gruppen substituiert sind. Beispiele für positiv geladenene Gruppen sind quaternäres Ammonium, quaternäres Phosphonium, ternäres Sulfonium oder ein m-fach geladener zwei- bis vierwertiger heterocyclischer Rest. Die Anbindung des m-fach positiv geladenen Restes Rg an die Piperidin-1-oxylreste erfolgt vorzugsweise über die Heteroatome des m-fach positiv geladenen Restes. Besonders bevorzugte Beispiele für Reste Rg sind die Reste -N⁺R₁₄R₁₅-R₁₆-[N⁺R₁₄R₁₅]_{f}-, -P⁺R₁₄R₁₅-R₁₆-[P⁺R₁₄R₁₅]_{f}-, -S⁺R₁₄-R₁₅-[S⁺R₁₄]_{f}- oder -[Het^{m+}]_{f}-, worin R₁₄ und R₁₅ unabhängig voneinander Alkyl, Cycloalkyl, Aryl, Aralkyl oder Heterocyclyl, insbesondere C₁-C₆-Alkyl, Cyclohexyl, Phenyl oder Benzyl sind, f die oben definierte Bedeutung besitzt, R₁₆ einen f+1-wertigen organischen Rest darstellt und Het einen zwei- bis vierwertigen und m-fach positiv geladenen heterocyclischen Rest darstellt, der ein bis drei Ringstickstoffatome oder ein Ringstickstoffatom und ein bis zwei Ringsauerstoffatome oder Ringschwefelatome aufweist, besonders bevorzugt einen zwei- bis vierwertigen Imidazolium-, Pyridinium-, Guanidinium-, Uronium-, Thiouronium-, Piperidinium- oder Morpholiniumrest. Beispiele für R₁₆ entsprechen den Beispielen für R₈.

Beispiele für zweiwertige organische Reste R₁₆ sind Alkylen, Cycloalkylen, Arylen, Aralkylen oder Heterocyclylen. Diese Reste sind bereits weiter oben eingehend beschrieben worden.

Beispiele für dreiwertige organische Reste R₁₆ sind Alkyltriyl, Cycloalkyltriyl, Aryltriyl, Aralkyltriyl oder Heterocyclyltriyl. Diese Reste entsprechen den bereits weiter oben eingehend beschriebenen zweiwertigen Resten mit dem Unterschied, dass diese mit drei kovalenten Bindungen anstelle von zwei kovalenten Bindungen mit dem Rest des Moleküls verbunden sind.

Beispiele für vierwertige organische Reste R₁₆ sind Alkylquaternyl, Cycloalkylquaternyl, Arylquaternyl, Aralkylquaternyl oder Heterocyclylquaternyl. Diese Reste entsprechen den bereits weiter oben eingehend beschriebenen zweiwertigen Resten mit dem Unterschied, dass diese mit vier kovalenten Bindungen anstelle von zwei kovalenten Bindungen mit dem Rest des Moleküls verbunden sind.

R₇ ist ein u-fach negativ geladener, vorzugsweise ein einfach negativ geladener einwertiger organischer Rest. Dabei handelt es sich in der Regel um Alkyl, Alkoxy, Haloalkyl, Cycloalkyl, Aryl, Aralkyl oder Heterocyclyl, das ein bis vier einfach negativ geladene Reste enhält, insbesondere ein bis vier Carbonsäurereste oder ein bis vier Sulfonsäurereste oder einen mit ein bis vier Carbonsäureresten oder mit ein bis vier Sulfonsäureresten substituierten einwertigen heterocyclischen Rest. Der Ladungsausgleich erfolgt über das oder die Kationen Z^{q+}. Die Anbindung des u-fach negativ geladenen Restes an den Piperidin-1-oxylrest erfolgt vorzugsweise über ein Kohlenstoffatom des einfach negativ geladenen Restes.

R₁₀ ist ein m-fach negativ geladener, vorzugsweise ein ein- oder zweifach negativ geladener zwei- bis vierwertiger organischer Rest. Dabei handelt es sich um einen organischen Rest, der m einfach negativ geladene Gruppen aufweist und der über zwei, drei oder vier kovalente Bindungen mit dem Rest des Moleküls verbunden ist. Beispiele für R₁₀ entsprechen den weiter oben für R₈ aufgeführten Beispielen mit dem Unterschied, dass diese Reste zusätzlich mit m einfach negativ geladenen Gruppen substituiert sind oder m negative geladene Gruppen im Molekülgerüst aufweisen. So kann R₂₆ Alkylen, Alkylenoxy, Poly(alkylenoxy), Alkylenamino, Poly(alkylenamino), Cycloalkylen, Arylen, Aralkylen oder Heterocyclylen bedeuten, die mit m einfach negativ geladenen Gruppen substituiert sind. Beispiele für einfach negativ geladenene Reste sind Carbonsäurereste oder Sulfonsäurereste oder mit ein bis vier Carbonsäureresten oder mit ein bis vier Sulfonsäureresten substituierte einwertige heterocyclische Reste. Der Ladungsausgleich erfolgt über das oder die Kationen Z^{q+}. Die Anbindung des m-fach negativ geladenen Restes an den Piperidin-1-oxylrest erfolgt vorzugsweise über ein Kohlenstoffatom des m-fach negativ geladenen Restes.

Die erfindungsgemäß eingesetzten redoxaktiven Komponenten der Formeln Ib und Ie weisen Gegenionen X^{q-} auf. Durch diese werden die im restlichen Molekül vorhandenen positiven Ladungen ausgeglichen. Bei den Gegenionen X^{q-} kann es sich um anorganische oder um organische q-wertige Anionen handeln.

Beispiele für anorganische Anionen X^{q-} sind Halogenidionen, wie Fluorid, Chlorid, Bromid oder lodid, oder Hydroxidionen oder Anionen anorganischer Säuren, wie Phosphat, Sulfat, Nitrat, Hexafluorophosphat, Tetrafluoroborat, Perchlorat, Chlorat, Hexafluoroantimonat, Hexafluoroarsenat, Cyanid.

Beispiele für organische Anionen X^{q-} sind Anionen ein- oder mehrwertiger Carbonsäuren oder ein- oder mehrwertiger Sulfonsäuren, wobei diese Säuren gesättigt oder ungesättigt sein können. Beispiele für Anionen organischer Säuren sind Acetat, Formiat, Trifluoroacetat, Trifluormethansulfonat, Pentafluorethansulfonat, Nonafluorbutansulfonat, Butyrat, Citrat, Fumarat, Glutarat, Lactat, Malat, Malonat, Oxalat, Pyruvat oder Tartrat.

Die erfindungsgemäß eingesetzten redoxaktiven Komponenten der Formeln Ic und If weisen Gegenionen Z^{q+} auf. Durch diese werden die im restlichen Molekül vorhandenen negativen Ladungen ausgeglichen. Bei den Gegenionen Z^{q+} kann es sich um anorganische oder um organische q-wertige Kationen handeln.

Beispiele für anorganische Kationen Z^{q+} sind Wasserstoffionen oder ein- oder mehrwertige Metallionen. Bevorzugt werden Wasserstoffionen oder ein- oder zweiwertige Metallionen, insbesonder Alkali- oder Erdalkalikationen eingesetzt.

Beispiele für organische Kationen Z^{q+} sind Ammonium, Imidazolium, Pyridinium, Guanidinium, Uronium, Thiouronium, Piperidinium, Morpholinium oder Phosphonium.

Index q ist vorzugsweise 1 oder 2 und insbesondere 1.

Index f ist vorzugsweise 1 oder 2 und insbesondere 1.

Index I ist vorzugsweise 1/2 oder 1 und insbesondere 1.

Index m ist vorzugsweise 1 oder 2 und insbesondere 1.

Index n ist vorzugsweise 1/2, 1 oder 2 und insbesondere 1/2 oder 1.

Index o ist vorzugsweise 1 oder 2 und insbesondere 1.

Index u ist vorzugsweise 1 oder 2, insbesondere 1.

Besonders bevorzugt werden in der erfindungsgemäßen Redox-Flow-Batterie Katholyte eingesetzt, die als redoxaktive Komponente die oben definierten Verbindungen der Formeln Ia und/oder Id enthalten.

Ebenfalls besonders bevorzugt werden in der erfindungsgemäßen Redox-Flow-Batterie Katholyte eingesetzt, die als redoxaktive Komponente die oben definierten Verbindungen der Formeln Ib und/oder Ie oder der Formeln Ic und/oder If enthalten, worin X ausgewählt wird aus der Gruppe der Halogenidionen, Hydroxidionen, Phosphationen, Sulfationen, Perchlorationen, Hexafluorophosphationen oder Tetrafluoroborationen und worin Z ausgewählt wird aus der Gruppe der Wasserstoffionen, Alkali- oder Erdalkalimetallkationen, sowie der substituierten oder unsubstituierten Ammoniumkationen.

Ebenfalls besonders bevorzugt werden in der erfindungsgemäßen Redox-Flow-Batterie Katholyte eingesetzt, die als redoxaktive Komponente die oben definierten Verbindungen der Formeln I, Ia, Ib, Ic, Id, Ie oder If enthalten, worin R₁, R₂, R₃ und R₄ C₁-C₆-Alkyl und bevorzugt Ethyl oder Methyl bedeuten.

Ganz besonders bevorzugt werden in der erfindungsgemäßen Redox-Flow-Batterie Katholyte eingesetzt, die als redoxaktive Komponente die oben definierten Verbindungen der Formel Ia enthalten, in denen R₅ Wasserstoff, C₁-C₆-Alkyl, C₁-C₆-Alkoxy, C₁-C₆-Teil- oder Perfluoralkyl, C₁-C₆-Teil- oder Perchloralkyl, C₁-C₆-Fluorchloralkyl, Phenyl, Benzyl, Fluor, Chlor, Hydroxy, Amino oder Nitro ist.

Ebenfalls ganz besonders bevorzugt werden in der erfindungsgemäßen Redox-Flow-Batterie Katholyte eingesetzt, die als redoxaktive Komponente die oben definierten Verbindungen der Formel Id enthalten, in denen R₈ Alkylen, Alkyltriyl, Alkylquaternyl, Alkyloxydiyl, Alkyloxytriyl, Alkyloxyquaternyl, Arylen, Aryltriyl, Arylquaternyl, Heterocyclylen, Heterocyclyltriyl oder Heterocyclylquaternyl ist, ganz besonders bevorzugt C₂-C₆-Alkylen, wie Ethylen oder Propylen, oder C₂-C₆-Alkoxydiyl, wie 1,2-Dioxyethylen oder 1,3-Dioxypropylen, oder C₃-C₆-Alkoxytriyl, wie ein 1,2,3-Propantriolrest oder ein Trimethylolpropanrest, oder C₄-C₆-Alkoxyquaternyl, wie ein Pentaerithritolrest, oder Phenylen, Phenyltriyl oder Phenylquaternyl ist.

Bei den in der erfindungsgemäßen Redox-Flow-Batterie als Anolyt eingesetzten Zinksalzen handelt es sich in der Regel um Zinksalze in der Oxidationsstufe II. Die erfindungsgemäß eingesetzten Zinksalze sind vorzugsweise wasserlöslich. Zinksalze können beliebige anorganische oder organische Anionen aufweisen. Beispiele für solche Anionen sind weiter oben aufgeführt.

Unter Wasserlöslichkeit einer Verbindung wird im Rahmen dieser Beschreibung eine Löslichkeit von mindestens 1 g der Verbindung in 1 I Wasser bei 25°C verstanden.

Beispiele für Zinksalze sind Zinkchlorid, Zinkfluorid, Zinkbromid, Zinkiodid, Zinknitrat, Zinknitrit, Zinkhydrogencarbonat, Zinksulfat, Zinkperchlorat, Zinktetrafluoroborat und Zinkhexafluorophosphat. Neben Zinksalzen mit anorganischen Anionen lassen sich auch Zinksalze mit organischen Anionen einsetzen, beispielsweise Zinkacetat, Zinkoxalat oder Zinkformiat.

Wie in Figur 2 gezeigt, werden während des Ladevorgangs im Elektrolyt gelöste Zink(II)-Kationen auf der Anodenoberfläche zu elementarem Zink(0) reduziert. Dabei kann die Anode aus beliebigem elektrisch leitfähigem Material, vorzugsweise aus Metall, insbesondere aus Zink oder Zinklegierungen bestehen. Durch die Aufnahme von zwei Elektronen wird metallisches Zink auf der Elektrodenoberfläche abgeschieden. Im umgekehrten Fall geht metallisches Zink von der Elektrodenoberfläche durch die Abgabe von zwei Elektronen in Zinkionen über, die sich im Anolyten anreichern.

Die erfindungsgemäße Redox-Flow-Batterie zeichnet sich durch eine hohe Umweltverträglichkeit aus, da auf toxische redoxaktive Substanzen komplett verzichtet werden kann. Sowohl das Redoxpaar Zink(II)/Zink(0) als auch das Redoxpaar TEMPO⁺/TEMPO haben im Havarie-Fall einen geringen Umwelteinfluss im Vergleich zu konventionellen Vanadium-Flussbatterien.

Besonders bevorzugte erfindungsgemäße Redox-Flow-Batterien weisen eine Zink-Feststoffanode mit dem Redoxpaar Zink(II)/Zink(0) auf.

Weitere besonders bevorzugte erfindungsgemäße Redox-Flow-Batterien weisen eine 2,2,6,6-Tetramethylpiperidinyloxyl-basierte Kathode mit dem Redoxpaar 2,2,6,6-Tetramethylpiperidinyl-N-oxoammonium/2,2,6,6-Tetramethylpiperidinyl-N-oxyl auf.

Der Vorteil gegenüber den beschriebenen vollorganischen Redox-Flow-Batterien liegt zum einen in der Reduzierung von Produktionskosten. Die Zink-Anode ist wesentlich kosteneffizienter herzustellen als bekannte organische Anoden. Zum anderen zeichnet sich das Redoxpaar Zink(II))/Zink(0) durch sehr gute Stabilität gegen äußere Umwelteinflüsse, wie zum Beispiel die Empfindlichkeit gegen Sauerstoff aus. Herkömmliche Systeme müssen sauerstofffrei gehalten werden; dies verkompliziert die Konstruktion der Batterie erheblich und erhöht die Betriebskosten. Bei dem Einsatz einer Zink-Anode kann hierauf komplett verzichtet werden.

Zink besitzt zudem eine sehr hohe Überspannung in wässrigen Medien und ermöglicht so ein extrem hohes Potentialfenster. Als Potentialfenster ist die Spannung (Potentialbereich) zu verstehen, die aufgrund der Lage der Redoxpaare, im Bereich der elektrochemischen Spannungsreihe, zwischen Kathode und Anode maximal erreicht werden kann, ohne dass dabei ungewollte Nebenreaktionen oder Zersetzungen der redoxaktiven Spezies, des Leitadditivs, des Elektrolyten, oder einer anderen Komponente der gesamten Batterie eintreten. Herkömmliche wässrige Flussbatterien sind auf ein Potentialfenster von 1,2 V beschränkt. Beim Überschreiten dieser würde sonst Wasserstoff-Gas entstehen. Durch den Einsatz einer Zink-Anode kann das Potentialfenster bis auf über 2 V erweitert werden. Dies führt zu einer erheblichen Steigerung der elektrischen Leistung pro Zelle. Zink besitzt eine sehr hohe Überspannung gegenüber Wasserstoff, deswegen entsteht trotz der hohen Spannung von 2 V kein Wasserstoff an der Anode und die Batterie kann sicher betrieben werden.

Im Vergleich zu dem bereits bekannten Einsatz von Polyanilin-Partikeln weist die erfindungsgemäße Redox-Flow-Batterie vorzugsweise kein elektrisch leitfähiges Polymer auf. Dadurch gelingt es, das Potential der Batterie über einen möglichst weiten Ladezustand konstant zu halten. Herkömmliche Energiespeicher auf Basis von leitfähigen Polymeren zeichnen sich meist durch steile Potentialkurven aus, die einen praktischen Einsatz als Energiespeicher häufig verhindern oder erschweren.

In einer bevorzugten Ausführungsform der erfindungsgemäßen Redox-Flow-Batterie stehen die einzelnen 2,2,6,6-tetrasubstituierten Pyridinyloxyl-Einheiten nicht in Konjugation zueinander. Dadurch finden die Redoxreaktionen der einzelnen Einheiten stets bei gleichem Potential statt. Ebenso ist die Redoxkinetik von 2,2,6,6-tetrasubstituiertem Pyridinyloxy sehr schnell und erlaubt hohe Ladegeschwindigkeiten. 2,2,6,6-Tetrasubstituiertes Pyridinyloxyl, wie TEMPO, ist eines der wenigen stabilen organischen Radikale und ebenso wie Zink gegenüber Luftsauerstoff unempfindlich.

Herkömmliche organische Redox-Flow-Batterien besitzen vergleichsweise geringe Energiedichten aufgrund der im Vergleich zu Metallsalzen begrenzteren Löslichkeit. Durch den Einsatz des Zink(II)/Zink(0)-Redoxpaares und der guten Löslichkeit von Zink(II)-Kationen in Wasser und organischen Lösemitteln kann das benötigte Volumen für den Anolyten reduziert und je nach Skalierung der Kapazität gegebenenfalls sogar auf einen Tank zur Speicherung verzichtet werden. Dies reduziert das benötigte Volumen der gesamten Batterie und steigert zudem die Gesamteffizienz des Energiespeichers, da weniger oder keine elektrische Energie für den Betrieb einer Pumpe zur Zirkulation des Anolyten benötigt wird. Übliche Energiedichten für Zink-basierte Hybrid-Flow-Batterien liegen bei 50-80 Wh/L. Die Energiedichten von Redox-Flow-Batterien, die nur redoxaktive organische Verbindungen verwenden, liegen in der Regel zwischen 2-16 Wh/L.

Die redoxaktiven Komponenten werden vorzugsweise in gelöster Form eingesetzt. Es sind aber auch Einsätze von Dispersionen der redoxaktiven Komponenten oder von flüssigen redoxaktiven Komponenten möglich.

Die Molmassen der erfindungsgemäß im Katholyten eingesetzten redoxaktiven Komponenten enthaltend Reste der Formel I können in weiten Bereichen schwanken. Besonders bevorzugt werden redoxaktive Komponenten enthaltend Reste der Formel I eingesetzt, deren Molmassen sich im Bereich von 150 bis 20.000 g/mol, vorzugsweise im Bereich von 150 bis 2.000 g/mol und ganz besonders bevorzugt im Bereich von 150 bis 800 g/mol bewegen.

Die Viskosität des erfindungsgemäß eingesetzten Elektrolyten liegt typischerweise im Bereich von 1 mPas bis zu 10³ mPas, insbesondere bevorzugt 1 bis 10² mPas und ganz besonders bevorzugt 1 bis 20 mPas (gemessen bei 25 °C mit einem Rotationsviskosimeter, Platte/Platte).

Die Herstellung der erfindungsgemäß eingesetzten redoxaktiven Komponenten enthaltend die Reste der Formel I kann nach Standardverfahren der organischen Synthese erfolgen. Dem Fachmann sind diese Vorgehensweisen bekannt.

Die erfindungsgemäße Redox-Flow-Batterie kann neben den oben beschriebenen redoxaktiven Komponenten noch weitere für solche Zellen übliche Elemente oder Komponenten enthalten.

In der erfindungsgemäßen Redox-Flow-Batterie kommen in beiden Kammern ausgewählte redoxaktive Komponenten zum Einsatz, die durch eine semipermeable Membran voneinander getrennt sind und die in den Kammern in gelöster, flüssiger oder in dispergierter Form vorliegen.

Der Elektrolyt besteht aus Wasser oder aus Wasser und einem organischen Lösemittel in dem bzw. in denen zusätzliche Stoffe gelöst sind. Diese dienen dem Ladungsausgleich während des Ladens oder Entladens der Batterie oder haben einen positiven Einfluss auf die Stabilität oder Leistungsparameter der Batterie. Stoffe, die für den Ladungsausgleich verantwortlich sind, werden Leitadditive genannt und Stoffe, die positive Auswirkungen auf die Stabilität oder Leistungsparameter haben, werden Hilfsadditive genannt. Bei den Leitadditiven handelt es sich in der Regel um organische oder anorganische Salze. Ferner wird bei dem Elektrolyten zwischen Katholyt und Anolyt unterschieden. Der Katholyt enthält neben dem Lösemittel und dem Leit-/Hilfsadditiv das redoxaktive Kathodenmaterial 2,2,6,6-tetrasubstituiertes Piperidinyloxyl, insbesondere TEMPO. Der Anolyt enthält neben dem Lösemittel und dem Leit-/Hilfsadditiv das redoxaktive Anodenmaterial Zink(II). Ebenso können Zink(II)-Kationen auch Teil der Additive sein. Somit kann das redoxaktive Anodenmaterial Zink(II) sowohl im Anolyten als auch im Katholyten enthalten sein.

Beispiele für Elektrolytlösungsmittel sind Wasser oder Gemische von Wasser mit Alkoholen (z.B. Ethanol), Kohlensäureestern (z.B. Propylencarbonat), Nitrilen (z.B. Acetonitril), Amiden (z.B. Dimethylformamid, Dimethylacetamid), Sulfoxiden (z.B. Dimethylsulfoxid), Ketonen (z.B. Aceton), Lactonen (z.B. gamma-Butyrolacton), Lactamen (z.B. *N*-Methyl-2-pyrrolidon), Nitroverbindungen (z.B. Nitromethan), Ethern (z.B. Tetrahydrofuran), chlorierte Kohlenwasserstoffen (z.B. Dichlormethan), Carbonsäuren (z.B. Ameisensäure, Essigsäure), Mineralsäuren (z.B. Schwefelsäure, Halogenwasserstoffe bzw. Halogenwasserstoffsäuren). Bevorzugt sind Wasser oder Gemische von Wasser mit Kohlensäureestern (z.B. Propylencarbonat) oder mit Nitrilen (z.B. Acetonitril). Besonders bevorzugt ist Wasser.

Beispiele für Leitadditive sind Salze, die Anionen ausgewählt aus der Gruppe Halogenidionen (Fluoridion, Chloridion, Bromidion, Iodidion), Hydroxidionen, Anionen anorganischer Säuren (z. B. Phosphationen, Sulfationen, Nitrationen, Hexafluorophosphationen, Tetrafluoroborationen, Perchlorationen, Chlorationen, Hexafluoroantimonationen, Hexafluoroarsenationen, Cyanidionen) oder Anionen organischer Säuren (z.B. Acetationen, Formiationen, Trifluoroessigsäureionen, Trifluormethansulfonation, Pentafluorethansulfonationen, Nonafluorbutansulfonationen, Butyrationen, Citrationen, Fumarationen, Glutarationen, Lactationen, Malationen, Malonationen, Oxalationen, Pyruvationen, Tartrationen) enthalten. Besonders bevorzugt sind Chlorid- und Fluoridionen, Hydroxidionen, Phosphationen, Sulfationen, Perchlorationen, Hexafluorophosphationen und Tetrafluoroborationen; sowie Kationen ausgewählt aus der Gruppe der Wasserstoffionen (H⁺), Alkali- oder Erdalkalimetallkationen (z.B. Lithium, Natrium, Kalium, Magnesium, Calcium), Zink, Eisen, sowie substituierten oder unsubstituierten Ammoniumkationen (z.B. Tetrabutylammonium, Tetramethylammonium, Tetraethylammonium), wobei die Substituenten im Allgemeinen Alkylgruppen sein können. Wasserstoffionen, Lithiumionen, Natriumionen, Kaliumionen, Tetrabutylammoniumionen und deren Gemische sind besonders bevorzugt. Insbesondere die Leitsalze: NaCl, KCl, LiPF₆, LiBF₄, NaBF₄, NaPF₆, NaClO₄, NaOH, KOH, Na₃PO₄, K₃PO₄, Na₂SO₄, NaSO₃CF₃, LiSO₃CF₃, (CH₃)₄NOH, n-Bu₄NOH, (CH₃)₄NCl, n-Bu₄NCl, (CH₃)₄NBr, n-Bu₄NBr, n-Bu₄NPF₆, n-Bu₄NBF₄, n-Bu₄NClO₄ und deren Gemische wobei n-Bu für die n-Butylgruppe steht

Besonders bevorzugte erfindungsgemäße Redox-Flow-Batterien enthalten im Elektrolyt ein Leitadditiv, das Anionen ausgewählt aus der Gruppe der Halogenidionen, Hydroxidionen, Phosphationen, Sulfationen, Perchlorationen, Hexafluorophosphationen oder Tetrafluoroborationen enthält, insbesondere ein Leitadditiv aufgebaut aus diesen Anionen und Kationen ausgewählt aus der Gruppe der Wasserstoffionen, Alkali- oder Erdalkalimetallkationen, sowie der substituierten oder unsubstituierten Ammoniumkationen.

Beispiele für Hilfsadditive sind Tenside, Viskositätsmodifizierer, Pestizide, Puffer, Stabilisatoren, Katalysatoren, Leitadditive, Frostschutzmittel, Temperaturstabilisatoren und/oder Schaumbrecher.

Tenside können nichtionisch, anionisch, kationisch oder amphoter sein. Besonders bevorzugt sind nichtionische Tenside (z.B. Polyalkylenglycolether, Fettalkoholpropoxylate, Alkylglucoside, Alkyl-polyglucoside, Oktylphenolethoxylate, Nonylphenolethoxylate, Saponine, Phospholipide).

Beispiele für Puffer sind Kohlensäure-Bicarbonat-Puffer, Kohlensäure-Silicat-Puffer, Essigsäure-Acetat-Puffer, Phosphatpuffer, Ammoniakpuffer, Citronensäure- oder Citratpuffer, Tris(hydroxymethyl)-aminomethan, 4-(2-Hydroxyethyl)-1-piperazinethanesulfonsäure, 4-(2-Hydroxyethyl)-piperazin-1-propansulfonsäure, 2-(N-Morpholino)ethansulfonsäure, Barbital-Acetat-Puffer).

Das Redoxpotential der redoxaktiven Komponente kann zum Beispiel mittels Cyclovoltammetrie bestimmt werden. Dieses Verfahren ist dem Fachmann bekannt (vergleiche Allen J. Bard und Larry R. Faulkner, "Electrochemical Methods: Fundamentals and Applications", 2001, 2. Auflage, John Wiley & Sons; Richard G. Compton, Craig E. Banks, "Understanding Voltammetry", 2010, 2. Auflage, Imperial College Press).

Die erfindungsgemäße Redox-Flow-Batterie enthält eine semipermeable Membran. Diese erfüllt folgende Funktionen
- Trennung von Anoden- und Kathodenraum
- Zurückhalten der redoxaktiven Komponente im Katholyten, also Zurückhalten des Kathoden-Aktiv-Materials
- Durchlässigkeit für die Leitsalze des Elektrolyten, die zum Ladungsausgleich dienen, also für Anionen und/oder Kationen des Leitsalzes bzw. für die im Elektrolyten enthaltenen Ladungsträger allgemein.

Bei der Membran kann es sich unter anderen um eine Größenausschlussmembran, z. B. eine Dialysemembran, aber auch um eine ionenselektive Membran handeln. Die Membran verhindert den Durchtritt der redoxaktiven 2,2,6,6-tetrasubstituierten Piperidinyloxyl-Verbindung in den Anodenraum. Der Durchtritt von gelösten Zink(II)-Kationen, muss nicht, aber kann durch die Membran ebenfalls gehemmt werden.

Die erfindungsgemäß eingesetzte Membran, beispielsweise eine für Ionen des Leitadditivs permeable Membran oder eine Dialysemembran, trennt die redoxaktiven Komponenten in den beiden Kammern.

Die Werkstoffe der Membran können je nach Anwendungsfall aus Kunststoffen, Keramiken, Gläsern, Metallen oder textilen Flächengebilden bestehen. Beispiele für Werkstoffe sind organische Polymere, wie Cellulose oder modifizierte Cellulose, beispielsweise Celluloseether oder Celluloseester, Polyethersulfon, Polysulfon, Polyvinylidenfluorid, Polyester, Polyurethane, Polyamide, Polypropylen, Polyvinylchlorid, Polyacrylnitril, Polystyrol, Polyvinylalkohol, Polyphenylenoxid, Polyimide, Polytetrafluorethylen und deren Derivate, oder weiterhin Keramiken, Gläser oder Filze. Auch aus mehreren Materialien bestehende Membranen (Komposite) sind möglich.

Die Membranen und die daraus resultierenden Hybrid- Flow-Batterien können in verschiedenen Erscheinungsformen eingesetzt werden. Beispiele dafür sind Flachmembranen, Taschenfilterbauweise und gewickelte Module. Diese Ausführungsformen sind dem Fachmann bekannt. Bevorzugt werden Flachmembranen eingesetzt.

Die erfindungsgemäß eingesetzte Membran kann zur besseren Stabilität, z. B. durch ein siebförmiges oder perforiertes Kunststoffmaterial oder - gewebe, geträgert sein.

Die Dicke der erfindungsgemäß eingesetzten Membran kann in weiten Bereichen schwanken. Typische Dicken liegen im Bereich zwischen 0,1 µm und 5 mm, insbesondere bevorzugt zwischen 10 µm und 200 µm.

Neben den oben beschriebenen redoxaktiven Komponenten, Elektrolyten und Membranen enthält die erfindungsgemäße Redox-Flow-Zelle vorzugsweise weitere Komponenten. Dabei handelt es sich um
- Fördermittel, wie Pumpen, sowie Tanks und Rohre für den Transport und die Lagerung von redoxaktiven Komponenten
- Elektroden, bevorzugt bestehend aus oder enthaltend Graphit, Graphitvlies, Graphitpapier, Carbon-Nano-Tube-Teppichen, Aktivkohle, Russ oder Graphen
- gegebenenfalls Stromableiter, wie z.B. aus Graphit oder aus Metallen

Die positive Elektrode kann folgende weitere Materialien enthalten oder aus diesen bestehen:
Edelmetallbeschichtetes oder diamantbeschichtes Titan, Graphit, Siliziumkarbid, insbesondere Platin- und/oder Iridium- und/oder Rhuteniumoxid-beschichtetes Titan, Diamant bzw. mit elektrisch leitfähigen Bestandteilen, z. B. Bor, dotierter Diamant, Glaskohlenstoff (Lothar Dunsch: Elektrochemische Reaktionen an Glaskohlenstoff, Zeitschrift für Chemie, 14, 12, p463-468, Dezember 1974), Indium-Zinn-Oxid, Blei, Blei-Silber-Legierung, z. B. Blei-Silber-Legierung mit 1% Silber, Zinn, Zinnoxid, Ruß, Spinnelle (wie z. B. in EP 0042984 beschrieben), Perowskite (CaTiO₃), Delafossite (ent-haltend Kupfer- und/oder Eisenoxid), Antimon, Wismut, Kobalt, Platin und/oder Platinmohr, Palladium und/oder Palladiummohr, Mangan, Polypyrrol (wie z. B. in EP 0191726 A2, EP 0206133 A1 beschrieben), Edelstahl, Hastelloy oder Eisen-Chrom-Nickel-haltige Legierungen
Nickel enthaltende positive Elektroden werden bevorzugt dann eingesetzt, wenn der Elektrolyt einen alkalischen pH-Wert von >= 7-8 aufweist.

Bei beschichteten Elektrodenmaterialien können folgende bekannte Beschichtungsverfahren zur Anwendung kommen: chemische Dampfabscheidung (CVD), physikalische Dampfabscheidung (PVD), galvanische Abscheidung, stromlose Abscheidung aus einer flüssigen Lösung, welche das Metall in gelöster Form und ein Reduktionsmittel enthält und wobei das Reduktionsmittel die Abscheidung des gewünschten Metalls auf einer Oberfläche bewirkt.

Die negative Elektrode enhält Zink und kann darüber hinaus beispielsweise noch folgende Materialien enthalten:
Edelstahl, Hastelloy oder Eisen-Chrom-Nickel-haltige Legierungen, Graphit, Graphitvlies, Graphitpapier, Carbon-Nano-Tube-Teppichen, Aktivkohle, Russ oder Graphen.

Die erfindungsgemäßen Redox-Flow-Batterien enthalten als weitere optionale aber bevorzugte Komponente Stromableiter. Diese haben die Aufgabe, einen möglichst guten elektrischen Kontakt zwischen Elektrodenmaterial und der externen Stromquelle bzw. Stromsenke herzustellen.

Als Stromableiter können in den erfindungsgemäßen Redox-Flow-Batterien Aluminium, Alumiumlegierungen, Kupfer, Edelstahl, Hastelloy, Eisen-Chrom-Nickel-Legierungen, edelmetallbeschichtetes Titan oder Tantal, insbesondere Platin- und/oder Iridium- und/oder Rutheniumoxid-beschichtetes Titan, Niob, Tantal, Hafnium oder Zirkonium verwendet werden.

Zur Herstellung beschichteter Stromableiter können u. a. folgende bekannte Beschichtungsverfahren zur Anwendung kommen: chemische Dampfabscheidung (CVD), physikalische Dampfabscheidung (PVD), galvanische Abscheidung, stromlose Abscheidung aus einer flüssigen Lösung, welche das Metall in gelöster Form und ein Reduktionsmittel enthält und wobei das Reduktionsmittel die Abscheidung des gewünschten Metalls auf einer Oberfläche bewirkt.

Die erfindungsgemäße Redox-Flow-Batterie kann auf unterschiedlichsten Gebieten eingesetzt werden. Dabei kann es sich im weitesten Sinne um die Speicherung von elektrischer Energie für mobile und stationäre Anwendungen handeln. Die Erfindung betrifft auch die Verwendung der Redox-Flow-Batterie für diese Zwecke.

Beispiele für Anwendungen sind Einsätze als stationäre Speicher für die Notstromversorgung, den Spitzenlastausgleich, sowie für die Zwischenspeicherung elektrischer Energie aus erneuerbaren Energiequellen, insbesondere auf dem Sektor der Photovoltaik und der Windkraft, aus Gas-, Kohle-, Biomasse-, Gezeiten,- und Meereskraftwerken und Einsätze auf dem Gebiet der Elektromobilität, wie als Speicher in Land-, Luft- und Wasserfahrzeugen.

Die erfindungsgemäße Redox-Flow-Batterie eignet sich besonders für kleine Redox-Flow-Batterie-Systeme z.B. für den Einsatz im Haushalt oder auch in mobilen Anwendungen, da diese auf kleinerem Volumen eine hohe elektrische Leistung und Kapazität, einen niedrigen eigenen Strombedarf, geringe Toxizität und unkomplizierte Konstruktion sowie niedrigen Betriebsaufwand im Vergleich zu herkömmlichen Redox-Flow-Batterien verspricht.

Die erfindungsgemäßen Redox-Flow-Batterien können in an sich bekannte Weise in serieller oder paralleler Weise miteinander verschaltet werden.

Die nachfolgenden Beispiele erläutern die Erfindung ohne diese darauf zu begrenzen.

Im Folgenden wird exemplarisch der Aufbau zweier möglicher TEMPO/Zink-Hybrid-Flow-Batterien beschrieben. Als redoxaktive Zink-Verbindung wurde Zinkdichlorid verwendet. Es können aber auch vergleichbare Salze, wie Zinkperchlorat oder Zinktetrafluoroborat, eingesetzt werden.

### Beispiel 1

In einem ersten Beispiel wurde als TEMPO-Verbindung ein TEMPO-Methacrylat-Copolymer eingesetzt, das zur verbesserten Löslichkeit mit [2-(Methacryloyloxy)-ethyl]-trimethylammoniumchlorid copolymerisiert worden war. Es können aber auch Polymere mit anderen Polymerrückgraten und/oder mit anderen löslichkeitsvermittelnden Gruppen eingesetzt werden. Als zusätzliches Leitadditiv wurde Natriumchlorid verwendet. Als Hilfsadditiv wurde Ammoniumnitrat zur Einstellung des gewünschten pH-Wertes und zur Stabilisierung des Zink(II)/Zink(0) RedoxPaares eingesetzt. Als Membran wurde eine kostengünstige Dialysemembran mit einem Größenausschlusslimit von 1.000 g/mol (Dalton) verwendet.

In Abbildung 4 ist eine exemplarische Lade-/Entlade-Kurve der oben beschriebenen Poly-TEMPO/Zink-Hybrid-Flow-Batterie dargestellt. Als Elektrolytlösungsmittel wurde Wasser verwendet.

### Beispiel 2

Des Weiteren wurde in einer zweiten exemplarischen Batterie das niedermolekulare TEMPO-Derivat 4-Hydroxy-2,2,6,6-tetramethylpiperidin-1-oxyl (TEMPOL) eingesetzt. Ebenso können sich in 4-Position andere Reste befinden, welche die Löslichkeit der TEMPO Verbindung verbessern. Als Membran wurde eine kostengünstige Dialysemembran mit einem Größenausschlusslimit von 1.000 g/mol (Dalton) verwendet. Besonders bei der Verwendung niedermolekularer TEMPO-Derivate ist auch der Einsatz einer ionenselektiven Membran, die also nur für bestimmte Stoffe, z.B. nur für Anionen oder Kationen passierbar ist, möglich.

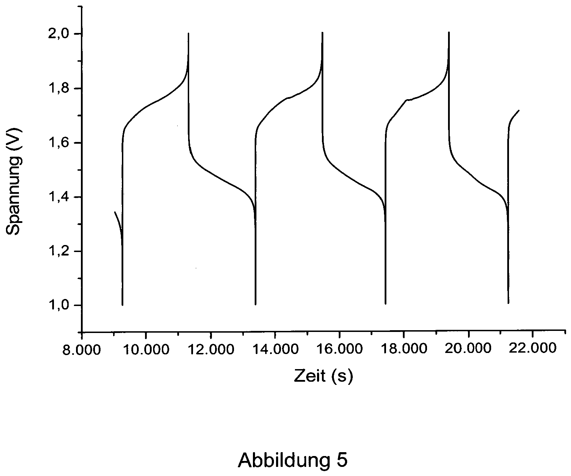

In Abbildung 5 ist eine exemplarische Lade-/Entlade-Kurve der oben beschriebenen TEMPOL/Zink-Hybrid-Flow-Batterie dargestellt. Als Elektrolytlösungsmittel wurde Wasser verwendet.

Die so im Labormaßstab konstruierten Batterien zeichnen sich durch ihre äußerst simple Konstruktion, sehr gute Stabilität und Langlebigkeit aus. Dies ist vor allem auf den Einsatz der sehr stabilen und sauerstoffunempfindlichen redoxaktiven Substanzen zurückzuführen. Es konnten von Anfang an stabile Lade-/Entlade-Kurven mit hohen mittleren Spannungen von über 1,75 V für Ladevorgänge und Spannungen über 1,65 V für Entladevorgänge erreicht werden (vgl. Abbildungen 4 und 5). Solch hohe Spannungen konnten bislang nur bei dem Einsatz von wesentlich giftigeren und/oder kostenintensiveren redoxaktiven Verbindungen erreicht werden. Ebenso ermöglicht der Einsatz von wässrigen Elektrolyten die Erreichung höherer Stromdichten im Lade- bzw. Entladevorgang im Vergleich zu nicht-wässrigen organischen Elektrolyen.

## Patentansprüche

1. Redox-Flow-Batterie zur Speicherung elektrischer Energie enthaltend eine Reaktionszelle mit zwei Elektrodenkammern (1, 2) für Katholyt und Anolyt, die jeweils mit mindestens einem Flüssigkeitsspeicher in Verbindung stehen, die durch eine semipermeable, für das Redoxpaar im Katholyten undurchlässige Membran (3) getrennt sind, und die mit Elektroden ausgerüstet sind, wobei die Elektrodenkammern (1, 2) jeweils mit Elektrolytlösungen gefüllt sind, die redoxaktive Komponenten in flüssiger Form, gelöst oder dispergiert in einem wässrigen Elektrolytlösungsmittel enthalten, sowie gegebenenfalls darin gelöste Leitsalze und eventuell weitere Additive, und der Katholyt eine Verbindung mit mindestens einem Rest der Formel I im Molekül als redoxaktive Komponente enthält 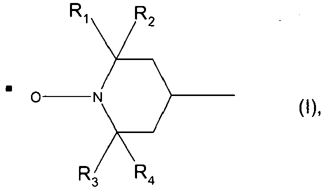 worin die von der 4-Position in der Struktur der Formel I abgehende Linie eine kovalente Bindung darstellt, welche die Struktur der Formel I mit dem Rest des Moleküls verbindet, und
R₁, R₂, R₃ und R₄ unabhängig voneinander Alkyl, Cycloalkyl, Aryl oder Aralkyl bedeuten, **dadurch gekennzeichnet, dass** der Anolyt Zinksalz als redoxaktive Komponente enthält.

2. Redox-Flow-Batterie nach Anspruch 1, **dadurch gekennzeichnet, dass** der Elektrolyt aus Wasser oder aus Wasser und einem organischen Lösemittel besteht, in dem oder in denen zusätzliche Stoffe gelöst sind.

3. Redox-Flow-Batterie nach mindestens einem der Ansprüche 1 oder 2, **dadurch gekennzeichnet, dass** die redoxaktive Komponente im Katholyt ein bis sechs Reste der Formel I im Molekül enthält.

4. Redox-Flow-Batterie nach Anspruch 3, **dadurch gekennzeichnet, dass** die redoxaktive Komponente im Katholyt ein bis drei Reste der Formel I im Molekül enthält.

5. Redox-Flow-Batterie nach Anspruch 4, **dadurch gekennzeichnet, dass** die redoxaktive Komponente im Katholyt eine Verbindung der Formeln Ia, Ib, Ic, Id, Ie und/oder If ist 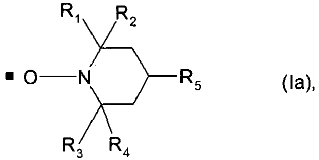 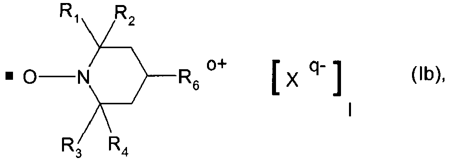 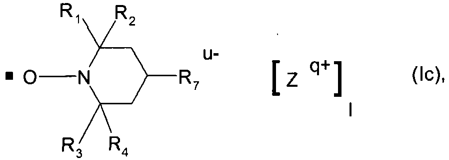 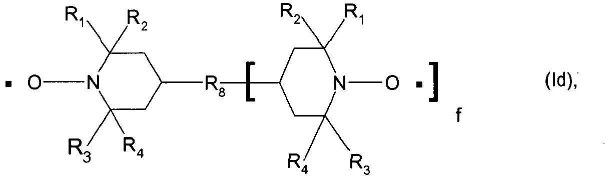 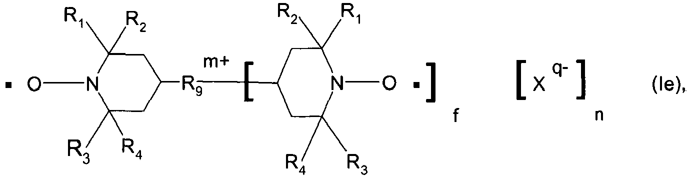 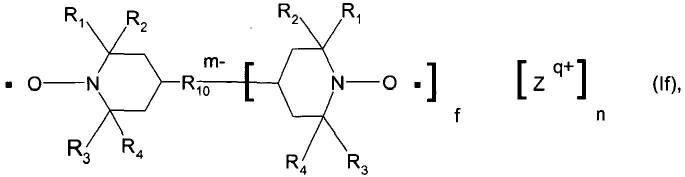 worin
R₁, R₂, R₃ und R₄, die in Anspurch 1 definierte Bedeutung besitzen,
X ein q-wertiges anorganisches oder organisches Anion oder eine Mischung derartiger Anionen bedeutet,
q eine ganze Zahl von 1 bis 3 ist,
o eine ganze Zahl von 1 bis 4 ist,
u eine ganze Zahl von 1 bis 4 ist,
R₈ eine zwei- bis vierwertige organische Brückengruppe ist,
R₅ Wasserstoff, Alkyl, Alkoxy, Haloalkyl, Cycloalkyl, Aryl, Aralkyl, Heterocyclyl, Halogen, Hydroxy, Amino, Nitro oder Cyano ist, und
R₆ ein o-fach, vorzugsweise ein einfach positiv geladener einwertiger organischer Rest, insbesondere ein quaternärer Ammoniumrest, ein quaternärer Phosphoniumrest, ein ternärer Sulfoniumrest oder ein o-fach, vorzugsweise ein einfach positiv geladener einwertiger heterocyclischer Rest ist,
R₉ ein m-fach positiv geladener zwei- bis vierwertiger organischer Rest, insbesondere ein zwei- bis vierwertiger quaternärer Ammoniumrest, ein zwei- bis vierwertiger quaternärer Phosphoniumrest, ein zwei- bis dreiwertiger ternärer Sulfoniumrest oder ein m-fach positiv geladener zwei- bis vierwertiger heterocyclischer Rest ist,
R₇ ein u-fach, vorzugsweise ein einfach negativ geladener einwertiger Rest, insbesondere ein Carboxyl- oder Sulfonsäurerest oder ein u-fach, vorzugsweise ein einfach negativ geladener einwertiger heterocyclischer Rest ist,
R₁₀ ein m-fach negativ geladener zwei- bis vierwertiger organischer Rest, insbesondere ein mit ein oder zwei Carboxyl- oder Sulfonsäuregruppen substituierter Alkylenrest, oder ein mit ein oder zwei Carboxyl- oder Sulfonsäuregruppen substituierter Phenylenrest oder ein mit ein oder zwei Carboxyl- oder Sulfonsäuregruppen substituierter zweiwertiger heterocyclischer Rest ist,
Z ein q-wertiges anorganisches oder organisches Kation oder eine Mischung derartiger Kationen bedeutet,
f eine ganze Zahl von 1 bis 3 ist,
l eine Zahl mit dem Wert o / q oder u / q ist,
m eine ganze Zahl von 1 bis 4 ist, und
n eine Zahl mit dem Wert m/q bedeutet.

6. Redox-Flow-Batterie nach Anspruch 5, **dadurch gekennzeichnet, dass** die redoxaktive Komponente im Katholyt eine Verbindung der Formeln Ia oder Id ist.

7. Redox-Flow-Batterie nach Anspruch 5, **dadurch gekennzeichnet, dass** X ausgewählt wird aus der Gruppe der Halogenidionen, Hydroxidionen, Phosphationen, Sulfationen, Perchlorationen, Hexafluorophosphationen oder Tetrafluoroborationen und dass Z ausgewählt wird aus der Gruppe der Wasserstoffionen, Alkali- oder Erdalkalimetallkationen, sowie der substituierten oder unsubstituierten Ammoniumkationen.

8. Redox-Flow-Batterie nach Anspruch 5, **dadurch gekennzeichnet, dass** redoxaktive Verbindungen der Formel Ia eingesetzt werden, in denen R₅ Wasserstoff, C₁-C₆-Alkyl, C₁-C₆-Alkoxy, C₁-C₆-Teil- oder Perfluoralkyl, C₁-C₆-Teil- oder Perchloralkyl, C₁-C₆-Fluorchloralkyl, Phenyl, Benzyl, Fluor, Chlor, Hydroxy, Amino oder Nitro ist.

9. Redox-Flow-Batterie nach Anspruch 5, **dadurch gekennzeichnet, dass** redoxaktive Verbindungen der Formel Id eingesetzt werden, in denen R₈ Alkylen, Alkyltriyl, Alkylquaternyl, Alkyloxydiyl, Alkyloxytriyl, Alkyloxyquaternyl, Arylen, Aryltriyl, Arylquaternyl, Heterocyclylen, Heterocyclyltriyl oder Heterocyclylquaternyl ist, ganz besonders bevorzugt C₂-C₆-Alkylen, wie Ethylen oder Propylen, oder C₂-C₆-Alkoxydiyl, wie 1,2-Dioxyethylen oder 1,3-Dioxypropylen, oder C₃-C₆-Alkoxytriyl, wie ein 1,2,3-Propantriolrest oder ein Trimethylolpropanrest, oder C₄-C₆-Alkoxyquaternyl, wie ein Pentaerithritolrest, oder Phenylen, Phenyltriyl oder Phenylquaternyl ist.

10. Redox-Flow-Batterie nach mindestens einem der Ansprüche 1 oder 2, **dadurch gekennzeichnet**, das diese Oligomere oder Polymere mit den wiederkehrenden Struktureinheiten der Formel II enthält 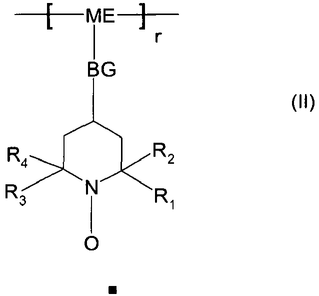 worin
R₁, R₂, R₃ und R₄, die in Anspruch 1 definierte Bedeutung besitzen,
ME eine von einem polymerisierbaren Monomer abgeleitete wiederkehrende Struktureinheit ist,
BG eine kovalente Bindung oder eine Brückengruppe ist, und
r eine ganze Zahl von 2 bis 150 ist.

11. Redox-Flow-Batterie nach mindestens einem der Ansprüche 1 bis 10,
**dadurch gekennzeichnet, dass** R₁, R₂, R₃ und R₄ C₁-C₆-Alkyl und bevorzugt Ethyl oder Methyl bedeuten.

12. Redox-Flow-Batterie nach mindestens einem der Ansprüche 1 bis 11,
**dadurch gekennzeichnet, dass** diese eine Zink Feststoffanode mit dem Redoxpaar Zink(II)/Zink(0) aufweist.

13. Redox-Flow-Batterie nach mindestens einem der Ansprüche 1 bis 12,
**dadurch gekennzeichnet, dass** diese eine 2,2,6,6-Tetramethylpiperidinyloxyl-basierte Kathode mit dem Redoxpaar 2,2,6,6-Tetramethylpiperidinyl-N-oxoammonium/2,2,6,6-Tetramethylpiperidinyl-N-oxyl aufweist.

14. Redox-Flow-Batterie nach mindestens einem der Ansprüche 1 bis 13,
**dadurch gekennzeichnet, dass** der Elektrolyt ein Leitsalz aufweist, das Anionen ausgewählt aus der Gruppe der Halogenidionen, Hydroxidionen, Phosphationen, Sulfationen, Perchlorationen, Hexafluorophosphationen oder Tetrafluoro-borationen enthält, insbesondere ein Leitsalz aufgebaut aus diesen Anionen und Kationen ausgewählt aus der Gruppe der Wasserstoffionen, Alkali- oder Erdalkalimetallkationen, sowie der substituierten oder unsubstituierten Ammoniumkationen.

15. Verwendung der Redox-Flow-Batterie nach einem der Ansprüche 1 bis 14 zur Speicherung von elektrischer Energie für stationäre und mobile Anwendungen, insbesondere als stationäre Speicher für die Notstromversorgung, den Spitzenlastausgleich, für die Zwischenspeicherung elektrischer Energie aus erneuerbaren Energiequellen, insbesondere auf dem Sektor der Photovoltaik und der Windkraft, oder aus Gas-, Kohle-, Biomasse-, Gezeiten- und Meereskraftwerken und für Einsätze auf dem Gebiet der Elektromobilität, als Speicher in Land-, Luft- und Wasserfahrzeugen.

16. Verwendung der Redox-Flow-Batterie nach Anspruch 15, **dadurch gekennzeichnet, dass** diese im Haushalt oder in mobilen Anwendungen eingesetzt wird.

## Claims

1. Redox flow battery for storing of electrical energy comprising a reaction cell having two electrode chambers (1, 2) for catholyte and anolyte, which are each connected to at least one store for liquid and are separated by a semipermeable membrane (3) that is impermeable for the redox pair in the catholyte, and which are equipped with electrodes, wherein the electrode chambers (1, 2) are each filled with electrolyte solutions comprising redox-active components in liquid state, dissolved or dispersed in an aqueous electrolyte solvent, as well as optionally conducting salts dissolved therein and optionally further additives, and wherein the catholyte comprises as a redox-active component a compound comprising at least one residue of formula I in the molecule 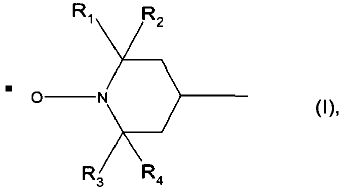 wherein
the line going off the 4-position in the structure of formula I represents a covalent bond connecting the structure of formula I with the remainder of the molecule, and
R₁, R₂, R₃ and R₄ independently of one another represent alkyl, cycloalkyl, aryl or aralkyl, **characterized in that** the anolyte comprises zinc salt as redox-active component.

2. The redox flow battery according to claim 1, wherein the electrolyte consists of water or water and an organic solvent, in which additional compounds are dissolved.

3. The redox flow battery according to at least one of claims 1 to 2, wherein the redox-active component in the catholyte comprises one to six residues of formula I in the molecule.

4. The redox flow battery according to claim 3, wherein the redox-active component in the catholyte comprises one to three residues of formula I in the molecule.

5. The redox flow battery according to claim 4, wherein the redox-active component in the catholyte is a compound of formulae la, Ib, Ic, Id, le and/or If 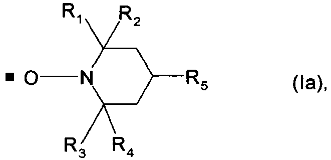 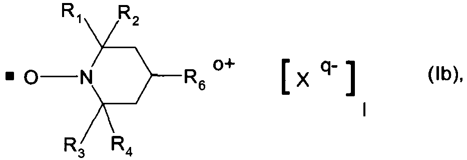 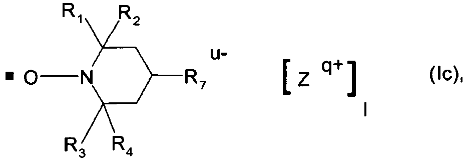 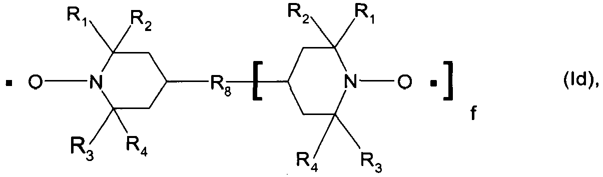 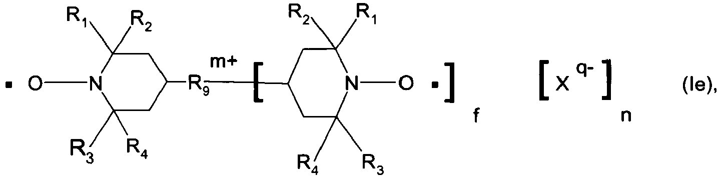 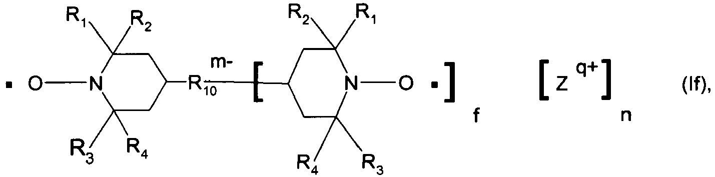 wherein
R₁, R₂, R₃ und R₄ have the meaning defined in claim 1,
X is a q-valent inorganic or organic anion or a a mixture of such anions,
q is an integer from 1 to 3,
o is an integer from 1 to 4,
u is an integer from 1 to 4,
R₈ is a two- to four-valent organic bridge group,
R₅ is hydrogen, alkyl, alkoxy, haloalkyl, cycloalkyl, aryl, aralkyl, heterocyclyl, halogen, hydroxy, amino, nitro or cyano, and
R₆ is an o-times, preferably a single positively charged monovalent organic residue, in particular a quaternary ammonium residue, a quaternary phosphonium residue, a ternary sulfonium residue, or an o-times, preferably a single positively charged monovalent heterocyclic residue,
R₉ is an m-times positively charged two-to four-valent organic residue, in particular a two- to four-valent quaternary ammonium residue, a two-to four-valent quaternary phosphonium residue, a two-to-three-valent ternary sulfonium residue or an m-times positively charged two to four-valent heterocyclic residue,
R₇ is an u-times, preferably a single negatively charged monovalent residue, in particular a carboxyl or sulfonic acid residue or an u-times, preferably a single negatively charged monovalent heterocyclic residue,
R₁₀ is an m-times negatively charged two-to-four-valent organic residue, in particular an alkylene residue substituted with one or two carboxyl groups or sulfonic acid groups, or a phenylene residue substituted with one or two carboxyl groups or sulfonic acid groups, or a two-valent heterocyclic residue substituted with one or two carboxyl groups or sulfonic acid groups,
Z is a q-valent inorganic or organic cation or a mixture of such cations,
f is an integer from 1 to 3,
I is a number with the value o/q or u/q,
m is an integer from 1 to 4, and
n is a number with the value m/q.

6. The redox flow battery according to claim 5, wherein the redox-active component in the catholyte is a compound of formulae Ia or Id.

7. The redox flow battery according to claim 5, wherein X is selected from the group consisting of halogenide ions, hydroxide ions, phosphate ions, sulfate ions, perchlorate ions, hexafluorophosphate ions or tetrafluoroborate ions and wherein Z is selected from the group consisting of hydrogen ions, alkali metal cations or earth alkaline metal cations, and of the substituted or unsubstituted ammonium cations.

8. The redox flow battery according to claim 5, wherein redox-active compounds of formula Ia are used, in which R₅ is hydrogen, C₁-C₆-alkyl, C₁-C₆-alkoxy, C₁-C₆-partial- or perfluoroalkyl, C₁-C₆-partial- or perchloroalkyl, C₁-C₆-fluorochloroalkyl, phenyl, benzyl, fluorine, chlorine, hydroxy, amino or nitro.

9. The redox flow battery according to claim 5, wherein redox-active compounds of formula Id are used, in which R₈ is alkylene, alkyltriyl, alkylquaternyl, alkyloxydiyl, alkyloxytriyl, alkyloxyquaternyl, arylene, aryltriyl, arylquaternyl, heterocyclylene, heterocyclyltriyl or heterocyclylquaternyl, very preferred C₂-C₆-alkylene, such as ethylene or propylene, or C₂-C₆-alkoxydiyl, such as 1.2-dioxyethylene or 1.3-dioxypropylene, or C₃-C₆-alkoxytriyl, such as a 1.2.3-propanetriol residue or a trimethylolpropane residue, or C₄-C₆-alkoxyquaternyl, such as a pentaerithritol residue, or phenylene, phenyltriyl or phenylquaternyl.

10. The redox flow battery according to at least one of claims 1 or 2, wherein this contains oligomers or polymers with the recurring structural units of formula II 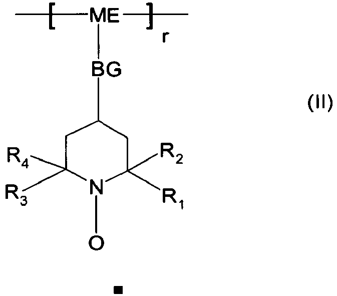 wherein
R₁, R₂, R₃ and R₄ have the meaning defined in claim 1,
ME is a recurring structural unit derived from a polymerisable monomer,
BG is a covalent bond or a bridge group, and
r is an integer between 2 and 150.

11. The redox flow battery according to at least one of claims 1 to 10, wherein R₁, R₂, R₃ and R₄ are C₁-C₆-alkyl, and preferably ethyl or methyl.

12. The redox flow battery according to at least one of claims 1 to 11, wherein this contains a solid matter zinc anode with the redox couple zinc(II)/zinc(0).

13. The redox flow battery according to at least one of claims 1 to 12, wherein this contains a 2.2.6.6-tetramethylpiperidinyloxyl-based cathode with the redox couple 2.2.6.6-tetramethylpiperidinyl-N-oxoammonium/2.2.6.6-tetramethyl-piperidinyl-N-oxyl.

14. The redox flow battery according to at least one of claims 1 to 13, wherein the electrolyte contains a conducting salt which comprises anions selected from the group consisting of halogenide ions, hydroxide ions, phosphate ions, sulfate ions, perchlorate ions, hexafluorophosphate ions or tetrafluoroborate ions, preferably a conducting salt composed of these anions and of cations selected from the group consisting of hydrogen ions, alkali metal cations or earth alkaline metal cations, as well as of substituted or unsubstituted ammonium cations.

15. Use of the redox flow battery according to one of the claims 1 to 14 for storage of electrical energy for stationary and mobile applications, preferably as stationary repository for emergency power supply, for peak load adjustment, and for the intermediate storage of electrical energy from replenishable energy sources, especially in the sector of photovoltaics and wind power or from gas-, coal-, biomass-, tidal- or marine-power plants, and for applications in the field of electromobility, as repository in land, air and water vehicles.

16. The use of the redox flow battery according to claim 15, wherein this is used in the household or in mobile applications.

## Revendications

1. Batterie à flux redox pour le stockage d'énergie électrique, contenant une cellule de réaction avec deux chambres à électrodes (1, 2) pour le catholyte et l'anolyte, qui communiquent chacune avec au moins un réservoir de liquide, qui sont séparées par une membrane semi-perméable (3), imperméable au couple redox du catholyte, et qui sont équipées d'électrodes, les chambres à électrodes (1, 2) étant remplies chacune de solutions d'électrolyte qui contiennent des composants redox-actifs sous forme liquide, dissoute ou dispersée dans un solvant électrolytique aqueux, ainsi que, le cas échéant, des sels conducteurs qui y sont dissous et éventuellement d'autres additifs, et le catholyte contenant un composé ayant au moins un radical de formule I dans la molécule en tant que composant redox-actif 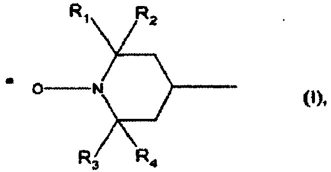 dans laquelle la ligne partant de la position 4 dans la structure de la formule I représente une liaison covalente qui relie la structure de la formule I au reste de la molécule, et
R₁, R₂, R₃ et R₄ représentent indépendamment un groupe alkyle, cycloalkyle, aryle ou aralkyle,
**caractérisée en ce que** l'anolyte contient un sel de zinc en tant que composant redox-actif.

2. Batterie à flux redox selon la revendication 1, **caractérisée en ce que** l'électrolyte est constitué d'eau ou d'eau et d'un solvant organique dans laquelle ou dans lesquels des substances supplémentaires sont dissoutes.

3. Batterie à flux redox selon au moins l'une des revendications 1 ou 2, **caractérisée en ce que** le composant redox-actif du catholyte contient un à six radicaux de formule I dans la molécule.

4. Batterie à flux redox selon la revendication 3, **caractérisée en ce que** le composant redox-actif du catholyte contient un à trois radicaux de formule I dans la molécule.

5. Batterie à flux redox selon la revendication 4, **caractérisée en ce que** le composant redox-actif du catholyte est un composé des formules la, Ib, le, Id, le et/ou If 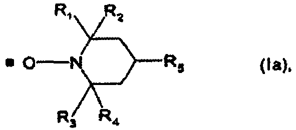 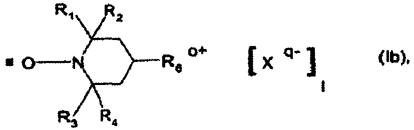 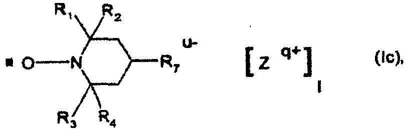 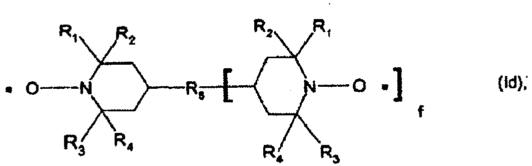 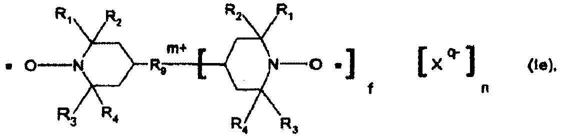 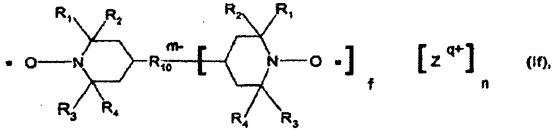 dans lesquelles
R₁, R₂, R₃ et R₄ possèdent la signification définie dans la revendication 1,
X est un anion inorganique ou organique de valence q ou un mélange de tels anions,
q est un nombre entier de 1 à 3,
o est un nombre entier de 1 à 4,
u est un nombre entier de 1 à 4,
R₈ est un groupe de pontage organique divalent à tétravalent,
R₅ représente hydrogène, alkyle, alcoxy, haloalkyle, cycloalkyle, aryle, aralkyle, hétérocyclyle, halogène, hydroxy, amino, nitro ou cyano, et
R₆ est un radical organique monovalent de charge positive o, de préférence simple, en particulier un radical ammonium quaternaire, un radical phosphonium quaternaire, un radical sulfonium ternaire ou un radical hétérocyclique monovalent de charge positive simple,
R₉ est un radical organique divalent à tétravalent de charge positive m, en particulier un radical ammonium quaternaire divalent à tétravalent, un radical phosphonium quaternaire divalent à tétravalent, un radical sulfonium ternaire divalent à trivalent ou un radical hétérocyclique divalent à tétravalent de charge positive m,
R₇ est un radical monovalent de charge négative u, de préférence simple, en particulier un radical carboxyle ou acide sulfonique ou un radical hétérocyclique monovalent de charge négative u, de préférence simple,
R₁₀ est un radical organique divalent à tétravalent de charge négative m, en particulier un radical alkylène substitué par un ou deux groupes carboxyle ou acide sulfonique, ou un radical phénylène substitué par un ou deux groupes carboxyle ou acide sulfonique ou un radical hétérocyclique divalent substitué par un ou deux groupes carboxyle ou acide sulfonique,
Z est un cation inorganique ou organique de valence q ou un mélange de tels cations,
f est un nombre entier de 1 à 3,
1 est un nombre ayant la valeur o/q ou u/q,
m est un nombre entier de 1 à 4 et
n est un nombre ayant la valeur m/q.

6. Batterie à flux redox selon la revendication 5, **caractérisée en ce que** le composant redox-actif du catholyte est un composé des formules la ou Id.

7. Batterie à flux redox selon la revendication 5, **caractérisée en ce que** X est choisi dans le groupe constitué par les ions halogénures, les ions hydroxyde, les ions phosphate, les ions sulfate, les ions perchlorate, les ions hexafluorophosphate ou les ions tétrafluoroborate et que Z est choisi dans le groupe constitué par les ions hydrogène, les cations de métaux alcalins ou de métaux alcalino-terreux et les cations ammonium substitués ou non substitués.

8. Batterie à flux redox selon la revendication 5, **caractérisé en ce que** l'on utilise des composés redox-actifs de formule la dans laquelle R₅ représente hydrogène, alkyle en C₁-C₆, alcoxy en C₁-C₆, alkyle partiel ou perfluoroalkyle en C₁-C₆, alkyle partiel ou perchloroalkyle en C₁-C₆, fluorochloroalkyle en C₁-C₆, phényle, benzyle, fluor, chlore, hydroxy, amino ou nitro.

9. Batterie à flux redox selon la revendication 5, **caractérisée en ce que** l'on utilise des composés redox-actifs de formule Id dans laquelle R₈ représente alkylène, alkyltriyle, alkylquaternyle, alkyloxydlyle, alkyloxytriyle, alkyloxyquaternyle, arylène, aryltriyle, arylquaternyle, hétérocyclylène, hétérocyclyltriyle ou hétérocyclylquaternyle, de préférence un alkylène en C₂-C₆, tel que l'éthylène ou le propylène, ou un alcoxydiyle en C₂-C₆, tel que le 1,2-dioxyéthylène ou le 1,3-dioxypropylène, ou un alcoxytriyle en C₃-C₆, tel qu'un radical 1,2,3-propanetriol ou un radical triméthylolpropane, ou un alcoxyquatemyle en C₄-C₆, tel qu'un radical pentaérithritol, ou phénylène, phényltriyle ou phénylquaternyle.

10. Batterie à flux redox selon au moins l'une des revendications 1 ou 2, **caractérisée en ce qu'**elle contient ces oligomères ou polymères avec les unités structurelles récurrentes de formule II 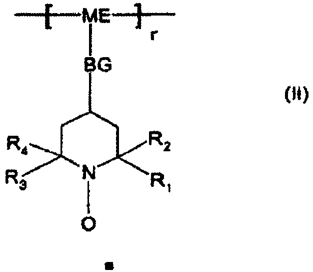 dans laquelle
R₁, R₂, R₃ et R₄ possèdent la signification définie dans la revendication 1,
ME est une unité structurelle récurrente dérivée d'un monomère polymérisable, BG est une liaison covalente ou un groupe de pontage et
r est un nombre entier de 2 à 150.

11. Batterie à flux redox selon au moins l'une des revendications 1 à 10, **caractérisée en ce que** R₁, R₂, R₃ et R₄ représentent un groupe alkyle en C₁-C₆ et de préférence éthyle ou méthyle.

12. Batterie à flux redox selon au moins l'une des revendications 1 à 11, **caractérisée en ce qu'**elle présente une anode solide en zinc avec le couple redox zinc(II)/zinc(0).

13. Batterie à flux redox selon au moins l'une des revendications 1 à 12, **caractérisée en ce qu'**elle présente une cathode à base de 2,2,6,6-tétraméthylpipéridinyloxyle avec le couple redox 2,2,6,6-tétraméthylpipéridinyl-N-oxoammonium/2,2,6,6-tétraméthylpipéridinyl-N-oxyl.

14. Batterie à flux redox selon au moins l'une des revendications 1 à 13, **caractérisée en ce que** l'électrolyte présente un sel conducteur qui contient des anions choisis dans le groupe constitué par les ions halogénures, les ions hydroxyde, les ions phosphate, les ions sulfate, les ions perchlorate, les ions hexafluorophosphate ou les ions tétrafluoroborate, en particulier un sel conducteur composé de ces anions et de cations choisis dans le groupe constitué par les ions hydrogène, les cations de métaux alcalins ou de métaux alcalino-terreux ainsi que les ions ammonium substitués ou non substitués.

15. Utilisation de la batterie à flux redox selon l'une des revendications 1 à 14 pour le stockage d'énergie électrique pour des applications stationnaires et mobiles, en particulier en tant que dispositif de stockage stationnaire pour l'alimentation électrique de secours, la compensation de charge de pointe, pour le stockage intermédiaire d'énergie électrique provenant de sources d'énergie renouvelable, en particulier dans le secteur du photovoltaïque et de l'éolien, ou de centrales électriques à gaz, à charbon, à biomasse, marémotrices et maritimes, ou pour des utilisations dans le secteur de l'électromobilité, comme dispositif de stockage dans des véhicules terrestres, aériens ou aquatiques.

16. Utilisation de la batterie à flux redox selon la revendication 15, **caractérisée en ce que** celle-ci est utilisée dans des applications domestiques ou mobiles.
